(19) Europäisches Patentamt
European Patent Office
Office européen des brevets

(11) EP 4 810 154 A1

(12) EUROPEAN PATENT APPLICATION
published in accordance with Art. 153(4) EPC

(43) Date of publication:
**23.09.2026 Bulletin 2026/39**

(21) Application number: **24891516.7**

(22) Date of filing: **15.11.2024**

(51) International Patent Classification (IPC):
***B01J 20/28*** (2006.01) ***B01D 53/14*** (2006.01)
***B01J 20/02*** (2006.01) ***B01J 20/18*** (2006.01)
***B01J 20/26*** (2006.01) ***B01J 20/34*** (2006.01)
***C01B 32/50*** (2017.01)

(52) Cooperative Patent Classification (CPC):
**B01D 53/14; B01J 20/02; B01J 20/18; B01J 20/26; B01J 20/28; B01J 20/34; C01B 32/50;** Y02C 20/40

(86) International application number:
**PCT/JP2024/040679**

(87) International publication number:
**WO 2025/105481 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.11.2023 JP 2023194643**

(71) Applicant: **ASAHI KASEI KABUSHIKI KAISHA**
**Tokyo 100-0006 (JP)**

(72) Inventors:
- **SAITO, Hideo**
  **Tokyo 100-0006 (JP)**
- **AMANO, Seiichi**
  **Tokyo 100-0006 (JP)**
- **ZHANG, Jingfeng**
  **Tokyo 100-0006 (JP)**
- **INADA, Fumika**
  **Tokyo 100-0006 (JP)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

# (54) CARBON DIOXIDE ADSORBENT, MODULE FOR ADSORPTION, SEPARATION AND CAPTURE OF CARBON DIOXIDE, AND DIRECT AIR CAPTURE METHOD

(57) Provided is a carbon dioxide adsorbent which comprises a plurality of fibrous structure sheets and a porous material B forming a porous inorganic support layer among the plurality of fibrous structure sheets, wherein in the porous material B, the holding amount of the porous inorganic support layer is 10 g/m$^2$ to 500 g/m$^2$ inclusive with respect to the plurality of fibrous structure sheets and the air permeation resistance with respect to a thickness direction of the fibrous structure sheets is 0.01-50 kPa·s/m inclusive.

2
1
5
4
3
3b
2

EP 4 810 154 A1

## Description

FIELD

The invention relates to a carbon dioxide adsorbent, to a module for adsorption, separation and capture of carbon dioxide, and to a direct air capture method.

BACKGROUND

In light of increasingly abnormal weather patterns such as heavy rain and drought and rising sea surface levels in recent years, global warming has come to be a serious issue, with mean atmospheric temperatures rising year-by-year across the world. The major cause of global warming is buildup of greenhouse gases such as carbon dioxide, leading to gradually increasing carbon dioxide concentration in the atmosphere, and since this increase in carbon dioxide concentration is universally understood to have a major effect on global warming, it has become urgent to reduce carbon dioxide levels in the atmosphere so as to help prevent global warming.
Efforts to reduce carbon dioxide are being made by all countries throughout the world, and in 2015 the "Paris Agreement" was adopted by the Conference of the Parties to the United Nations Framework Convention on Climate Change, or COP21, held in Paris. The Agreement specifies "holding the increase in the global average temperature to well below 2°C above pre-industrial levels and pursuing efforts to limit the temperature increase to 1.5°C above pre-industrial levels, recognizing that this would significantly reduce the risks and impacts of climate change".
Methods for lowering carbon dioxide levels in the atmosphere include not only techniques for recovering carbon dioxide emitted from factories, but also techniques for directly capturing carbon dioxide from the air (Direct Air Capture, or DAC).
One widely employed method for capturing carbon dioxide from factory exhaust gas is the use of liquid amines.
Techniques for capturing carbon dioxide at very low carbon dioxide levels of about 400 ppm, on the other hand, include solid amine methods wherein an amine is loaded on a solid support. Solid amine methods are being developed throughout the world as means for reducing energy at the desorption temperature of carbon dioxide.
One method for loading an amine on a solid support is disclosed in PTL 1, for example, as a method of separating carbon dioxide from a gas mixture employing surface-modified cellulose nanofibers, which allows reversible adsorption or desorption of carbon dioxide.
PTL 1 discloses a porous adsorption structure comprising surface-modified cellulose nanofibers. The porous adsorption structure described in PTL 1 comprises a support matrix consisting of surface-modified cellulose nanofibers covered on the surface with a covalent bonded coupling agent which comprises at least one monoalkyldialkoxy-aminosilane, the support matrix being a woven fabric of nanofibers having a void ratio of at least 20%.
PTL 2, for example, discloses a radial flow type system using, as a carbon dioxide absorber, nanofibrillated cellulose-based porous particles supporting an amine compound.
PTL 3, for example, discloses a method of coating an adsorbent, which may be a gas such as carbon dioxide, onto a substrate, a support, and/or a substrate coated with a support.
PTL 3 also discloses that the adhesive is selected from the group consisting of amines, melamine-containing amides, amine-containing polymers and their combinations,

the substrate is made of plastic or cellulose fibers of a woven fabric or nonwoven fabric, and
the support is made of alumina, silica, silica-alumina, titania, zirconia, carbon, zeolite or a metal organic framework (MOF), or a combination of the same.

PTL 3 further discloses that the substrate which is a monolithic structure of a metal or plastic is layered with a corrugated plastic sheet.

[CITATION LIST]

[PATENT LITERATURE]

[PTL 1] International Patent Publication No. WO2012/168346
[PTL 2] International Patent Publication No. WO2014/170184
[PTL 3] Japanese Patent Public Inspection No. 2014-533195

SUMMARY

[TECHNICAL PROBLEM]

The problem associated with DAC is that of energy cost. Energy cost can be lowered by reducing the electric power used to cause adsorption of carbon dioxide onto the adsorbent, and lowering the temperature for desorption of the carbon dioxide that has been adsorbed onto the adsorbent.

In order to reduce electric power during carbon dioxide adsorption, it is important to cause the carbon dioxide-containing gas to adsorb onto the adsorbent using as low an amount of electric power as possible. In other words, it is important to minimize pressure loss during adsorption.

As mentioned above, PTLs 1 and 3 disclose the use of specific nonwoven fabrics as substrates for carbon dioxide adsorbents, but they do not disclose a module for adsorption, separation and capture of carbon dioxide designed in consideration of pressure loss, or a nonwoven fabric suited for such a module.

Reduction of electric power during carbon dioxide adsorption also requires supporting as much of the carbon dioxide adsorbent as possible on the support, i.e. maximizing the specific surface area of the support.

Moreover, in order to increase carbon dioxide adsorption efficiency it is important to maximally increase opportunity for contact between the gas to be treated and the carbon dioxide adsorbent, and for example, this may involve reducing drift current of the gas to be treated inside the device, or reducing dead space.

PTL 2, for example, has high pressure loss when air has been introduced since the carbon dioxide absorber is in the form of particles, and therefore in order to minimize the amount of electric power used, it limits both the thickness of the carbon dioxide adsorption unit bed and the airflow rate during introduction of air.

PTL 3 discloses a carbon dioxide adsorbent having a honeycomb structure coated with porous particles supporting an amine compound.

Having the carbon dioxide adsorbent present in a honeycomb structure makes it possible to lower pressure loss even during introduction of air at a high airflow rate. However, since the thickness of the coated porous particle layer is restricted in order to cause diffusion of air that is introduced into the honeycomb structure, this limits the adsorption of carbon dioxide per cycle.

It is an object of the present invention to provide a carbon dioxide adsorbent that has low pressure loss during carbon dioxide adsorption and can increase carbon dioxide adsorption, as well as a module for efficient adsorption, separation and capture of carbon dioxide, and a direct air capture method.

[SOLUTION TO PROBLEM]

The gist of the present invention is as follows.

<Aspect 1>

A carbon dioxide adsorbent comprising:

a plurality of fiber structures and
a porous material B that forms a porous inorganic support layer between the plurality of fiber structures, wherein:

a loading amount of the porous material B of the porous inorganic support layer is 10 g/m$^2$ to 500 g/m$^2$ with respect to the plurality of fiber structures, and
an air-flow resistance in the thickness direction of the fiber structure is 0.01 kPa·s/m to 50 kPa·s/m.

<Aspect 2>

A carbon dioxide adsorbent comprising:

a fiber structure and
a porous material A supported on the surface or among voids of the fiber structure, wherein
the porous material A is supported in the voids of the fiber structure to an amount of 50 vol% or greater with respect to the fiber structure, a loading amount of the porous material A being 10 g/m$^2$ to 500 g/m$^2$ with respect to the fiber structure, and
a air-flow resistance in the thickness direction of the fiber structure is 0.01 kPa·s/m to 50 kPa·s/m.

<Aspect 3>

A carbon dioxide adsorbent according to aspect 1 or 2, which comprises:

a plurality of fiber structures, and
a porous material A supported on the surface or among voids of at least one of the fiber structures, wherein
the porous material A is supported in the voids of the fiber structure to an amount of 50 vol% or greater with respect to the fiber structure, a loading amount of the porous material A being 10 g/m$^2$ to 500 g/m$^2$ with respect to the fiber structure, and
an air-flow resistance in the thickness direction of the fiber structure is 0.01 kPa·s/m to 50 kPa·s/m.

<Aspect 4>

A carbon dioxide adsorbent according to any one of aspects 1 to 3, wherein a total loading amount of the porous materials A and B with respect to the fiber structure is 50 g/m$^2$ or greater.

<Aspect 5>

A carbon dioxide adsorbent having a layered structure comprising at least one layer of a carbon dioxide adsorbent according to any one of aspects 1 to 4.

<Aspect 6>

A carbon dioxide adsorbent according to any one of aspects 1 to 5, wherein:

the loading amount of the porous material A is 10 g/m$^2$ to 500 g/m$^2$ with respect to the fiber structure,
the loading amount of the porous material B is 10 g/m$^2$ to 500 g/m$^2$ with respect to the fiber structure, and
the total loading amount of the porous materials A and B is 50 g/m$^2$ or greater with respect to the fiber structure.

<Aspect 7>

A carbon dioxide adsorbent according to any one of aspects 2 to 6, wherein the porous material A comprises:

porous inorganic particles having a mean particle size of 0.1 μm to 30 μm, and
at least one type of porous inorganic particles selected from the group consisting of colloidal silica, colloidal alumina, and colloidal silica or colloidal alumina precursors, having a mean particle size of 1 nm to 400 nm, and
the porous inorganic particles with a mean particle size of 0.1 μm to 30 μm are present at 10 mass% to 99 mass% with respect to 100 mass% of the porous material A.

<Aspect 8>

A carbon dioxide adsorbent according to aspect 7, wherein the porous material A comprises:
porous inorganic particles with a mean particle size of 0.1 μm to 30 μm, and a polymer emulsion.

<Aspect 9>

A carbon dioxide adsorbent according to any one of aspects 1 to 8, wherein the porous inorganic support layer:

is formed of the porous material B comprising porous inorganic particles with a mean particle size of 30 μm to 3 mm and a hot-melt material having a melting point of 50°C to 150°C, and
comprises the hot-melt material at 1 mass% to 80 mass% with respect to the total of the porous inorganic particles and the hot-melt material.

<Aspect 10>

A carbon dioxide adsorbent according to any one of aspects 1 to 9, wherein the porous inorganic particles contained in the porous materials A and B each:
have a BET specific surface area of 50 m$^2$/g to 3000 m$^2$/g and a mean pore size of 1 nm to 50 nm, and are of at least one type

selected from the group consisting of silica, alumina, silica-alumina, titania, zirconia, activated carbon, zeolite, alkali metal ferrites and MOF.

<Aspect 11>

A carbon dioxide adsorbent according to any one of aspects 1 to 10, wherein the mean fiber diameter of the fiber structure is 1 μm to 50 μm and the void ratio of the fiber structure is 50% to 95%.

<Aspect 12>

A carbon dioxide adsorbent according to any one of aspects 1 to 11, wherein a compound with an amino group is supported on the porous material A and/or B in a range of 10 mass% to 300 mass%.

<Aspect 13>

A carbon dioxide adsorbent according to aspect 12, wherein the compound with an amino group comprises at least one type of silicone compound selected from the group consisting of silicone oil, silsesquioxane and MQ resins.

<Aspect 14>

A carbon dioxide adsorbent according to aspect 13, which comprises the silicone compound at 1 mass% to 90 mass% in the compound with an amino group.

<Aspect 15>

A module for adsorption, separation and capture of carbon dioxide, having a layered structure comprising at least one layer of a carbon dioxide adsorbent according to any one of aspects 1 to 14 and at least one layer of a spacer.

<Aspect 16>

A module for adsorption, separation and capture of carbon dioxide, having a corrugated structure employing at least one layer of a carbon dioxide adsorbent according to any one of aspects 1 to 14.

<Aspect 17>

A module for adsorption, separation and capture of carbon dioxide according to aspect 15 or 16,

wherein the corrugated structure comprises a core part and a liner part, and
a carbon dioxide adsorbent according to any one of aspects 1 to 14 is used for both the core part and the liner part.

<Aspect 18>

A module for adsorption, separation and capture of carbon dioxide according to aspect 17, wherein at least one selected from the group consisting of meshes, nonwoven fabrics and porous sheets is used in the liner part.

<Aspect 19>

A method for direct air capture (DAC) in which carbon dioxide in the atmosphere is directly captured, the method comprising the following steps:

an adsorption step in which carbon dioxide is adsorbed onto the carbon dioxide adsorbent in the module for adsorption, separation and capture of carbon dioxide according to any one of aspects 15 to 18; and
a desorption step in which the temperature or pressure is changed to desorb the carbon dioxide.

[ADVANTAGEOUS EFFECTS OF INVENTION]

The present invention provides a carbon dioxide adsorbent with low pressure loss during carbon dioxide adsorption and a high level of carbon dioxide adsorption, as well as a module for adsorption, separation and capture

of carbon dioxide, and a direct air capture method.

BRIEF DESCRIPTION OF DRAWINGS

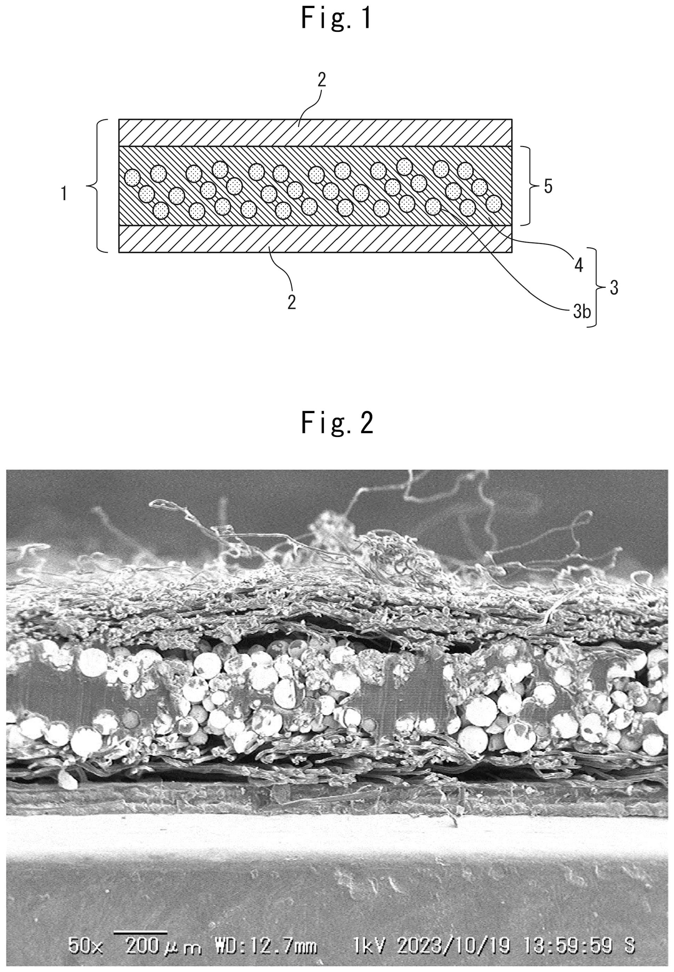

Fig. 1 is a conceptual drawing of a carbon dioxide adsorbent comprising porous material B of the embodiment.
Fig. 2 shows a scanning electron microscope image of a carbon dioxide adsorbent comprising porous material B of the embodiment.

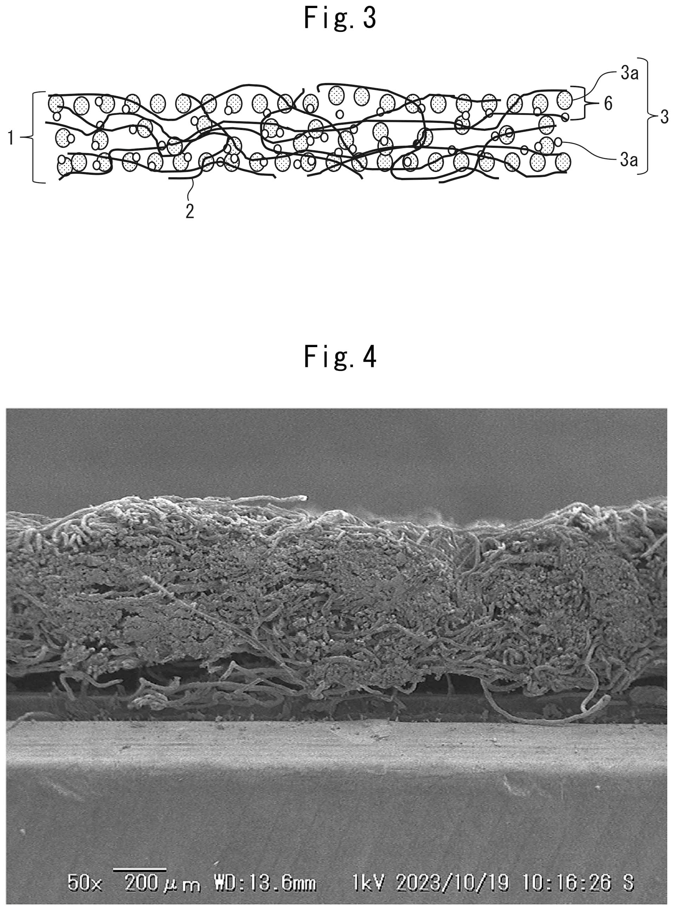

Fig. 3 is a conceptual drawing of a carbon dioxide adsorbent comprising porous material A of the embodiment.
Fig. 4 shows a scanning electron microscope image of a carbon dioxide adsorbent comprising porous material A of the embodiment.

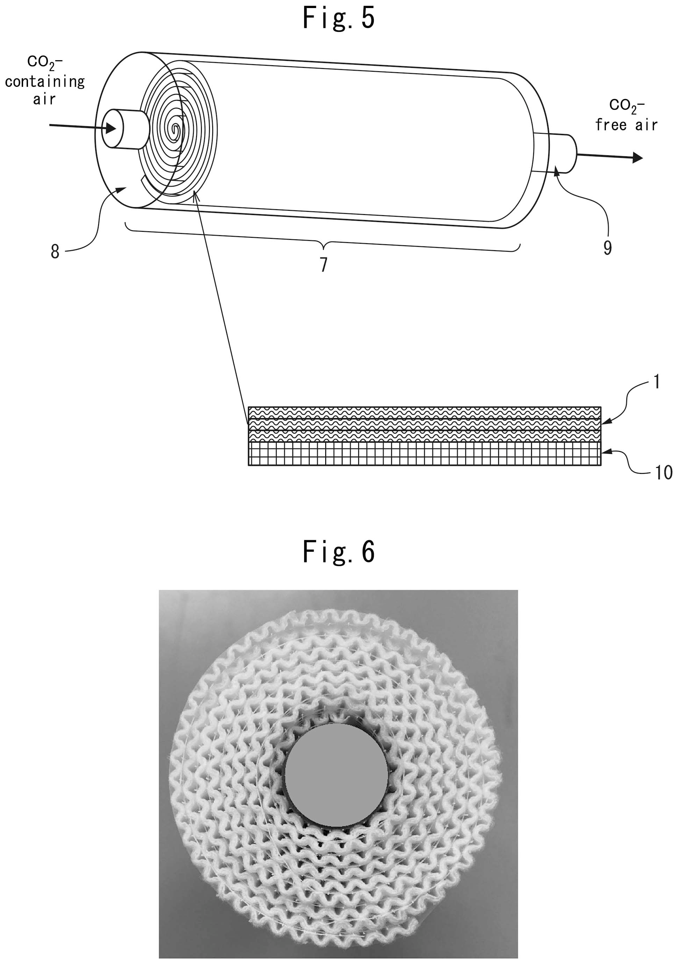

Fig. 5 is a schematic diagram showing a spiral-shaped module according to the embodiment.
Fig. 6 is a schematic diagram showing a corrugated module according to the embodiment.

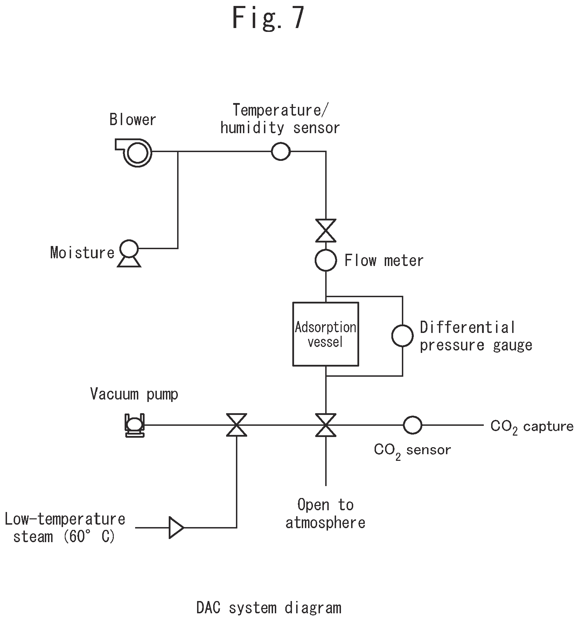

Fig. 7 is a system diagram of DAC (Direct Air Capture) technology.

DESCRIPTION OF EMBODIMENTS

An embodiment for carrying out the invention (hereunder also referred to as "the embodiment") will now be explained in detail. However, the embodiment is not limited to specific embodiment described below and may incorporate various modifications within the indicated ranges.

<Carbon dioxide adsorbent>

The carbon dioxide adsorbent may be any one that can adsorb carbon dioxide ($CO_2$). Carbon dioxide is preferably adsorbed from a process gas such as a synthetic gas, natural gas or exhaust gas, or from air, or a mixture thereof, and carbon dioxide is particularly preferably adsorbed from air.

One technology for capturing carbon dioxide from air is a DAC (Direct Air Capture) which may be a solid adsorption system (Solid DAC) wherein the carbon dioxide to be adsorbed is a solid, and a liquid adsorption system (Liquid DAC) wherein the carbon dioxide to be adsorbed is in solution.

The carbon dioxide adsorbent of the embodiment is preferably a solid adsorption system (solid DAC).

According to one aspect, the carbon dioxide adsorbent of the embodiment comprises a plurality of fiber structures, and a porous material B that forms a porous inorganic support layer between the plurality of fiber structures.

According to one aspect, the carbon dioxide adsorbent of the embodiment comprises a fiber structure and a porous material A supported on the surface of the fiber structure or among voids in the fiber structure.

According to one aspect, the carbon dioxide adsorbent of the embodiment comprises a plurality of fiber structures, a porous material A supported on the surface of at least one fiber structure or among voids of the fiber structure, and a porous material B which forms a porous inorganic support layer between the plurality of fiber structures.

Carbon dioxide can be suitably adsorbed with at least one layer of the carbon dioxide adsorbent of the embodiment (a carbon dioxide adsorbent layer, according to one aspect). From the viewpoint of improving carbon dioxide adsorption, the carbon dioxide adsorbent of the embodiment preferably has a layered structure of carbon dioxide adsorbent layers.

The carbon dioxide adsorbent of the embodiment has an air-flow resistance of 0.01 kPa·s/m to 50 kPa·s/m in the thickness direction of the fiber structure. The carbon dioxide adsorbent of the embodiment therefore has low pressure loss and high diffusibility of carbon dioxide inside the carbon dioxide adsorbent layers, even with a thick structure of the layered carbon dioxide adsorbent layers.

The air-flow resistance of the carbon dioxide adsorbent is measured in the following manner.

Using a KES-F8 air permeability tester (product of Kato Tech Corp.), measurement is performed in a width range of 1 m width × 50 cm length at a total of 200 locations (20 locations at equal spacings in the width direction of the carbon dioxide adsorbent, each comprising 10 locations at equal spacings in the lengthwise direction), and the average value and standard deviation are recorded as the air-flow resistance and the standard deviation for air-flow resistance of the carbon dioxide adsorbent (measurement area: 0.2 $\pi cm^2$: 8.9 mm diameter).

The term "supported" as used herein means that the substance of interest is immobilized by adhesion, electrostatic adsorption or reaction on a support.

Throughout the present disclosure, the term "support" refers to a substance serving as a foundation for a substance of interest, and as used herein it refers to a "fiber structure" or a "porous material" for support of a compound with an amino group.

(Fiber structure)

Any structure that can incorporate fibers, such as a woven fabric, knitted fabric, nonwoven fabric, felt, paper, three-dimensional network or sheet, may be used as the fiber structure of the embodiment. The fiber structure used is preferably at least one type of fiber structure selected from the group consisting of nonwoven fabrics, paper and sheet-like materials. The fiber structure is particularly preferably a nonwoven fabric from the viewpoint of strength, void ratio, air permeability and moldability. According to one aspect, the nonwoven fabric is composed of fibers and therefore has voids between the fibers.

In addition, since the fiber structure of the embodiment has a sheet form and a large specific surface area, it has numerous parts that contact with air, and can therefore reduce pressure loss during $CO_2$ adsorption.

In addition, the fiber structure of the embodiment allows the porous material A to be supported on the surface or within the voids, the porous inorganic support layer being formed with the porous material B inserted between a plurality of such fiber structures.

If the fiber structure is in a sheet-like form, it will be possible to support the porous material on both the front and back sides of the fiber structure when it is layered with a spacer or when it is processed into a corrugated structure, thus allowing more efficient contact with carbon dioxide.

The fibers used in the fiber structure may be fibers of any of various hydrophobic thermoplastic resins, or fibers of any degree of hydrophilicity.

Hydrophobic synthetic resin fibers include polyethylene, polypropylene and polyester.

Hydrophilic fibers include cellulosic fibers composed of cellulose, cellulose derivatives or regenerated cellulose, polyvinyl alcohol-based fibers and polyamide fibers, and hydrophilic fibers are preferred.

Cellulose may be wood pulp, recycled pulp, cotton or hemp.

Cellulose derivatives include cellulose acetate and carboxymethyl cellulose.

Regenerated cellulose may be cupra, rayon or lyocell.

Polyvinyl alcohol-based fibers include polyvinyl alcohol and polyvinyl formal.

Polyamide fibers include nylon (6-nylon or 6,6-nylon, according to one aspect).

Commercially available fiber structures include nonwoven fabrics made of regenerated cellulose long fibers (such as the product name: BEMLIESE, by Asahi Kasei Corp.), nonwoven fabrics made of nylon long fibers (such as the product name: ELTAS N03050, by Asahi Kasei Corp.) and nonwoven fabrics made of polyethylene terephthalate (PET) long fibers (such as the product name: ELTAS E05040, by Asahi Kasei Corp.).

The fiber structure of the embodiment is preferably a fiber structure satisfying the following specific conditions.

The mean fiber diameter of the fiber structure of the embodiment is preferably 1 $\mu$m to 50 $\mu$m.

The specific surface area of the fiber structure of the embodiment is preferably 0.01 $m^2/g$ to 100 $m^2/g$ and more preferably 0.1 $m^2/g$ to 100 $m^2/g$.

The thickness of the fiber structure of the embodiment is preferably 0.05 mm to 5 mm and more preferably 0.1 mm to 2.0 mm.

The basis weight of the fiber structure of the embodiment is preferably 0.1 $g/m^2$ to 1000 $g/m^2$ and more preferably 10 $g/m^2$ to 150 $g/m^2$.

The void ratio of the fiber structure of the embodiment is preferably 50% to 95% and more preferably 70% to 95%.

Since the fiber structure of the embodiment has a mean fiber diameter, void ratio etc. within the aforementioned specified ranges, it can support a large amount of porous material while reducing pressure loss, and it is therefore preferred as a substrate for a carbon dioxide adsorbent.

By reducing the fiber diameter of the fiber structure it is possible to increase its specific surface area, but optimization is essential in consideration of the mechanical properties of the sheet. The thickness and basis weight of the fiber structure are important from the viewpoint of ensuring contact area between the carbon dioxide adsorbent and the gas to be treated when the layering with a spacer.

The mean fiber diameter of the fiber structure is measured in the following manner.

The fiber structure is observed using a scanning electron microscope (trade name: JSM-6380 by JEOL Corp.) at 10,000x magnification, and an image of the fibers in the fiber structure is taken. After selecting 50 arbitrary fibers from the photographed image, and the mean value of the measurement is recorded as the mean fiber diameter.

The specific surface area of the fiber structure is measured in the following manner.

The specific surface area of the fiber structure is measured using a specific surface area/pore distribution measuring apparatus (TriStarII, product of Micromeritics, Japan). After drying 1 g of the fiber structure in a vacuum at 120°C for 2 hours, liquid nitrogen is introduced into the dried fiber structure. The adsorption of nitrogen gas onto the nonwoven fabric at the boiling point of liquid nitrogen is measured at 5 points with a relative vapor pressure (P/P0) in the range of 0.05 to 0.2, and then the BET specific surface area ($m^2/g$) is calculated by the BET (Brunauer-Emmett-Teller) method using the program provided in the apparatus.

The thickness of the fiber structure is measured in the following manner.

After drying 1 g of the fiber structure in a vacuum at 120°C for 2 hours, the dry fiber structure is measured by a thickness test according to JIS-L1096, with a load of 1.96 kPa. The measurement is performed 20 times and the average value is recorded as the thickness (mm) of the fiber structure.

The basis weight of the fiber structure is measured in the following manner.

After drying at 105°C to a fixed mass, it is allowed to stand for 16 hours or longer in a thermostatic chamber at 20°C, 65% RH and the mass is measured, determining the mass (g) per 1 $m^2$ of the fiber structure comprising the porous material. The measurement is performed 5 times and the average value is recorded as the basis weight ($g/m^2$) of the fiber structure.

The void ratio of the fiber structure is calculated in the following manner.

It is determined by the following formula after measuring the thickness and basis weight of the fiber structure in the manner described above.

Void ratio (%) = Basis weight of fiber structure/(density of fiber structure material × thickness of fiber structure)

The density of the fiber structure material is determined by loading 100 mg of the fiber structure to be measured into a 650 mm height × 30 mm inner diameter elongated glass tube graduated at 1 mm spacings, and calculation by the density gradient tube method using xylene-bromobenzene.

(Porous material)

According to one aspect, the porous material of the embodiment may be porous material A.

The porous material A of the embodiment preferably comprises at least two types of porous inorganic particles with different particle sizes.

The porous material A of the embodiment preferably comprises porous inorganic particles with a mean particle size of 0.1 μm to 30 μm (porous inorganic particles 1, according to one aspect) and porous inorganic particles with a mean particle size of 1 nm to 400 nm (porous inorganic particles 2, according to one aspect). The porous material A of the embodiment preferably comprises porous inorganic particles 1, porous inorganic particles 2 and a polymer emulsion.

The porous material A of the embodiment more preferably comprises porous inorganic particles with a mean particle size of 1 μm to 15 μm, and porous inorganic particles with a mean particle size of 3 nm to 200 nm.

Porous inorganic particles with a mean particle size of 0.1 μm to 30 μm include one or more selected from the group consisting of oxides such as alumina, silica, titania, zirconia, magnesia and alkali metal ferrites, complex oxides such as calcium silicate and silica-alumina, activated carbon, zeolite and metal organic frameworks (MOF).

Particularly preferred among these porous inorganic particles are alumina, silica, zeolite, activated carbon, alkali metal ferrites and MOF, from the viewpoint of the amount of carbon dioxide adsorption by the material itself, and the pore size and specific surface area when used as a support.

The porous inorganic particles may be produced by a conventionally known production process, or commercially available porous inorganic particles may be used. The porous inorganic particles produced by a conventionally known production process or commercially available porous inorganic particles may also be crushed using a pulverizer equipped with a hammer or cutter, for adjustment to a mean particle size within a specified range.

For example, when alumina is used as the porous inorganic particles for the embodiment, any crystal type of alumina such as α-type, γ-type or θ-type may be used.

Commercially available alumina products include powdered activated alumina (KC, KCG, A, AC Series) or spherical activated alumina (KHS, KHA, KHO, NKHO, NKHD, KHD, HD and FD Series) by Sumitomo Chemical Co., Ltd., and NEOBEADS by Mizusawa Industrial Chemicals, Ltd.

For example, when silica is used as the porous inorganic particles of the embodiment, it may be synthetic silica or mesoporous silica, and the synthetic silica can be produced by a wet method or dry method.

Examples of wet methods include precipitation and sol-gel methods, while the combustion method is an example of a dry method.

MCM-41 and SBA-15 are examples of mesoporous silica.

Synthetic silica products include SILYSIA (SILYSIA 370 and SILYSIA 250N) by Fuji Silysia Chemical, Ltd., NIPSIL by Tosoh Silica Corp., and CARPLEX by Evonik.

When titania is to be used as the porous inorganic particles of the embodiment, it may be anatase, rutile or brookite, for example, with no particular restriction on the structure. Anatase-type commercially available titania products include TA by Fuji Titanium Co., Ltd. Commercially available rutile-type titania products include the CR Series and R Series by Ishihara Sangyo Kaisha, Ltd.

When zirconia is used as the porous inorganic particles for the embodiment, there are no restrictions on the structure, and monoclinic, tetragonal or cubic crystals may be used. Commercially available zirconia products include the zirconium oxide UEP and RC Series by Daiichi Kigenso Kagaku Kogyo Co., Ltd.

When magnesia is used as the porous inorganic particles of the embodiment, it may be a cubic type. MTK-30 by Iwatani Corp. is an example of a commercially available magnesia product.

When an alkali metal ferrite is used as the porous inorganic particles for the embodiment, it may be sodium ferrite or lithium ferrite, with no particular restriction on the structure. Examples of alkali metal ferrite structures include $\alpha$-sodium ferrite having a trigonal layered rock salt structure, and $\beta$-sodium ferrite having orthorhombic crystals.

When calcium silicate is to be used as the porous inorganic particles for the embodiment, it may be $Ca_2SiO_4$, $Ca_3SiO_5$, $Ca_3Si_2O_7$, $CaSiO_3$, $CaOSiO_2$ or $3CaO_2SiO_2$, with no particular restriction on the structure, and a combination of different structures may also be used. Commercially available calcium silicates include xonotlite and tobamolite by Japan Insulation Co., Ltd.

When silica-alumina is used as the porous inorganic particles for the embodiment, the silica/alumina ratio is not particularly restricted. Commercially available silica-alumina products include NEOBEADS SA by Mizusawa Industrial Chemicals, Ltd.

When activated carbon, for example, is used as the porous inorganic particles of the embodiment, the starting material is not particularly restricted. Examples of starting materials for activated carbon include wood, sawdust, coconut shells, pulp spent liquor, cellulose waste, coal, petroleum and synthetic resins. Activated carbon obtained by carbonization of these starting materials may be used as the porous inorganic particles for the embodiment, or it may be further activated with water vapor, or by gas activation using carbon dioxide or air, or activation using chemicals such as zinc chloride, phosphoric acid or an alkali. Activation treatment is preferred because when activated carbon is used as the porous inorganic particles, the specific surface area increases in addition to widening of the pore size.

When zeolite is used as the porous inorganic particles for the embodiment, for example, it may be synthetic zeolite, artificial zeolite or natural zeolite, with no particular restriction on the elements in the zeolite or the method for producing it. For example, aluminum compounds, silicon compounds, alkali metal compounds and organic materials may be mixed and subjected to hydrothermal reaction, followed by drying and firing to produce zeolite.

Commercially available zeolites include Mizuka Sieves by Mizusawa Industrial Chemicals, Ltd., ZEOSTAR by Nippon Chemical Industrial Co., Ltd. and ZEOLUM by Tosoh Corp.

When MOF is used as the porous inorganic particles of the embodiment, for example, the MOF used may be one having a mutual complex of an organic ligand such as terephthalic acid, benzenetricarboxylic acid, imidazole or piperazine with a metal ion such as Al, Cu, Zn or Fe.

The porous inorganic particles with a mean particle size of 0.1 $\mu$m to 30 $\mu$m are preferably present at 10 mass% to 99 mass% in 100 mass% of the porous material A.

Porous inorganic particles having a mean particle size of 1 nm to 400 nm include one or more selected from the group consisting of colloidal silica, colloidal alumina, colloidal silica or colloidal alumina precursors, silica sol and alumina sol.

The colloidal silica to be used as the porous inorganic particles for the embodiment may be produced from sodium silicate, or it may be produced from a tetraalkoxysilane.

Colloidal silica produced from sodium silicate may be SNOWTEX by Nissan Chemical Industries, Ltd. Colloidal silica produced from a tetraalkoxysilane may be of the PL Series by Fuso Chemical Co., Ltd., or IDISIL by Evonik Co., Ltd.

The colloidal alumina used as the porous inorganic particles for the embodiment may be an alumina sol by Nissan Chemical Industries, Ltd., for example.

The colloidal silica and colloidal alumina used as the porous inorganic particles of the embodiment may also be used in precursor form.

The precursors for colloidal silica and colloidal alumina to be used as the porous inorganic particles of the embodiment may be orthosilicic acid or boehmite, for example.

Orthosilicic acid can be obtained by a method of neutralizing sodium silicate with sulfuric acid, or a method of hydration of a tetraalkoxysilane with water.

Boehmite can be obtained by heat treatment of aluminum hydroxide at 150°C to 300°C in a neutral to weakly basic aqueous solution.

The silica sol used for the embodiment is not particularly restricted in terms of starting materials and production method. For example, a compound produced using sodium silicate or an alkoxysilane such as tetramethoxysilane as starting material, dispersed in water or an organic solvent, may be used in admixture with the porous inorganic particles.

An alumina sol used for the embodiment may be one comprising pseudoboehmite nanoparticles dispersed in water or an organic solvent, used in admixture with the porous inorganic particles, and it may be bonded with the porous inorganic particles, between the fiber structures and between the porous inorganic particles.

According to one aspect, the porous material A comprises porous inorganic particles with a mean particle size of 0.1 $\mu$m to 30 $\mu$m, and a polymer emulsion.

The polymer emulsion used for the embodiment is preferably one that serves as the binder for the porous inorganic particles, and examples include acrylic emulsions, styrene-acrylic emulsions, vinyl acetate-based emulsions, ethylene-vinyl acetate copolymer emulsions, polyurethane emulsions, polybutadiene-based emulsions, styrene-buta-

diene-based emulsions and silicone-based emulsions.
Preferred among these are polyurethane emulsions, ethylene-vinyl acetate copolymer emulsions and styrene-butadiene emulsions, because these have high ability to hold porous inorganic particles when mixed with the porous inorganic particles to support the porous inorganic particles on the fiber structure, and the emulsion serving as the binder will be less likely to infiltrate into the pores of the porous inorganic particles.

The method for producing the emulsion is not particularly restricted, and for example, a vinyl acetate-based emulsion, ethylene-vinyl acetate copolymer-based emulsion or styrene-butadiene emulsion can be obtained by adding an emulsifier or stabilizer to water, and then adding the monomer starting material and a polymerization initiator, prior to emulsion polymerization. A polyurethane emulsion can be obtained by adding an isocyanate starting material and a polyol in water to form a urethane precursor, and then emulsifying the precursor to further promote reaction and form a polyurethane, and subsequently adding an emulsion stabilizer.

Examples of commercially available polyurethane emulsions that may be used include HYDRAN™ by DIC, and the Joncryl Series by BASF.

Examples of commercially available ethylene-vinyl acetate copolymer emulsions that may be used include PEIMAL™ by DOW Corp. and the SUMIKAFLEX Series by Sumitomo Chemical Co., Ltd. (for example: SUMIKAFLEX S-201HQ, product of Sumitomo Chemiflex, polymer concentration: 56 mass%).

The Acronal® Series by BASF may be used as a commercial styrene-butadiene-based emulsion product.

The method of loading the porous material A and polymer emulsion of the embodiment is not particularly restricted, and for example, it may be carried out by dispersing water and the porous material A in a mixing tank equipped with a stirrer or disperser, further adding the polymer emulsion to the mixing tank and dispersing it, and subsequently loading this onto the composite material into which the fiber structure of the embodiment and the porous material B have been loaded, by a method of coating such as dip coating, gravure coating or die coating, and drying it.

The amount of the polymer emulsion used for the embodiment with respect to the porous material A is preferably in the range of 1 part by mass to 200 parts by mass added to and mixed with 100 parts by mass of the porous material A, based on the solid mass of the polymer emulsion. The amount is more preferably in the range of 5 parts by mass to 100 parts by mass and even more preferably 10 parts by mass to 50 parts by mass. This range is preferred for satisfactory retentivity and $CO_2$ adsorption of the porous material A when the porous material A is loaded onto the fiber structure.

There may also be added to the porous material A, a dispersing agent for dispersion of the porous inorganic particles, or a binder (organic binder or inorganic binder) for loading of the porous material A onto the fiber surfaces of a fiber structure such as a nonwoven fabric.

Using a porous material A comprising porous inorganic particles with a mean particle size in the aforementioned specified range is preferred because air-flow resistance will be reduced while it is supported on the surfaces of the fibers composing the fiber structure, and the porous material A will be efficiently supported between the voids of the fiber structure.

According to one aspect, the porous material A is supported on the fiber surfaces of the fiber structure composed of fibers, or among the voids of the fibers of the fiber structure. According to one aspect, a high specific surface area per volume is obtained since the porous material A is supported in the voids of the fiber structure.

The porous material A of the embodiment is preferably supported in the voids of the fiber structure at 50 vol% or greater with respect to the fiber structure. More preferably, the porous material A supported in the voids of the fiber structure is present at 55 vol% or greater with respect to the fiber structure, even more preferably the porous material A supported in the voids is present at 60 vol% or greater with respect to the fiber structure, and particularly preferably the porous material A supported in the voids is present at 80 vol% or greater with respect to the fiber structure.

The porous material A is preferably supported in the voids of the fiber structure in an amount of 50 vol% or greater because this will reduce pressure loss when air flows through the module, when the carbon dioxide adsorbent of the embodiment has been modularized.

The proportion at which the porous material A is supported in the voids of the fiber structure can be determined by cutting a cross-section of the sample supporting the porous material A on the fiber structure in order to photograph a cross-sectional SEM image, and determining the thickness of the voids of the fiber structure on which the porous material A has been supported in the thickness direction of the fiber structure, and the thickness of the porous material A extending out from the fiber structure, to determine the proportion of the porous material A supported in the voids of the fiber structure.

The amount of the porous material A supported on the fiber structure is preferably 10 g/m$^2$ to 500 g/m$^2$ with respect to the fiber structure. The amount of the porous material A supported on the fiber structure is more preferably 20 g/m$^2$ to 300 g/m$^2$ with respect to the nonwoven fabric fiber structure.

The loading amount of the porous material A onto the fiber structure is preferably 10 g/m$^2$ or greater in order to increase the carbon dioxide adsorption, and it is preferably 500 g/m$^2$ or lower in order to reduce pressure loss during the carbon dioxide adsorption step.

According to one aspect, the porous material of the embodiment includes porous material B.

The porous material B used for the embodiment comprises one or more types of porous inorganic particles

selected from the group consisting of oxides such as alumina, silica, titania, zirconia, magnesia and alkali metal ferrites, complex oxides such as calcium silicate and silica-alumina, activated carbon, zeolite and metal organic frameworks (MOF).

Porous material B may be a zeolite 13X (product name: Mizuka Sieves) Mizusawa Industrial Chemicals, Ltd., Crushed type B silica gel by Toyota Kako Co., or CARiACT Q15 or CARiACT G by Fuji Silysia Chemical, Ltd.

The porous material B of the embodiment forms a porous inorganic support within the plurality of fiber structures. The porous material B comprises porous inorganic particles and a hot-melt material having a melting point of 50°C to 150°C.

The porous inorganic particles in the porous material B are preferably at least one type selected from the group consisting of the aforementioned porous inorganic particles having a mean particle size of 30 μm to 3 mm.

Examples of hot-melt materials with melting points of 50°C to 150°C include hot-melt materials of olefins such as polyethylene and polypropylene, ethylene vinyl acetate copolymers, polyamides, synthetic rubbers, acrylic compounds and polyurethanes, and hot-melt materials that are mixtures of olefins and ethylene vinyl acetate.

The proportion of the hot-melt material of the embodiment is preferably 1 mass% to 80 mass% with respect to the total of the porous inorganic particles and hot-melt material. The proportion of the hot-melt material is more preferably 10 mass% to 60 mass% with respect to the total of the porous inorganic particles and hot-melt material. The proportion of the hot-melt material of the embodiment is even more preferably 15 mass% to 50 mass% with respect to the total of the porous inorganic particles and the hot-melt material.

If the porous inorganic particles in the porous material B are within this specified range, it will be possible to reduce air-flow resistance in the thickness direction and reduce the effects of pressure loss during $CO_2$ adsorption and $CO_2$ desorption.

The loading amount of the porous material B that is to form the porous inorganic support layer, sandwiched between two or more fiber structures (according to one aspect, this is the loading amount of the porous inorganic support layer with respect to the fiber structure) is preferably 10 g/m$^2$ to 500 g/m$^2$. The amount is more preferably 10 g/m$^2$ to 400 g/m$^2$. The amount is further preferably 30 g/m$^2$ to 300 g/m$^2$ and particularly preferably 50 g/m$^2$ to 300 g/m$^2$.

The loading amount of the porous material B sandwiched between two or more fiber structures is preferably 10 g/m$^2$ or greater since this will increase adsorption of $CO_2$, and the loading amount of porous material B is also preferably 500 g/m$^2$ or lower since this will lower air-flow resistance in the thickness direction and facilitate diffusion of $CO_2$ into the pores of porous material B.

The total loading amount of the porous materials A and B with respect to the fiber structure is preferably 50 g/m$^2$ or greater. The amount is more preferably 55 g/m$^2$ or greater and even more preferably 60 g/m$^2$ or greater. The total loading amount of the porous materials A and B is preferably within this range to increase the amount of captured $CO_2$.

The total loading amount of the fiber structures of porous materials A and B is measured by the following method.

A 10 cm-square piece is cut from both the fiber structure before loading the porous materials A and B and the fiber structure after loading the porous materials A and B, and the weight of each is measured. By multiplying the weight increase before and after loading, by the porous inorganic particle concentration among the dispersoids in the dispersion comprising the porous materials A and B, it is possible to measure the loading amount of the porous materials A and B onto the fiber structure.

The mode of using the carbon dioxide adsorbent of the embodiment may be one in which the porous material A is supported on the surface or between the voids of the fiber structure, or one in which the porous material B is sandwiched between a plurality of fiber structures. For the mode of using the carbon dioxide adsorbent of the embodiment, the porous material B is preferably sandwiched between a plurality of fiber structures, with the porous material A being supported on the surfaces or between the voids of the fiber structures between which the porous material B has been sandwiched. $CO_2$ adsorption can be increased by such loading of the porous material A on the surfaces or between the voids of the fiber structures when the porous material B is supported between a plurality of fiber structures.

The air-flow resistance in the thickness direction, after the porous material A has been supported on the surfaces or between the voids of the fiber structures, is preferably 0.01 kPa·s/m to 50 kPa·s/m.

The air-flow resistance in the thickness direction, after the porous material A has been supported on the surfaces or between the voids of the fiber structures, is more preferably 0.01 kPa·s/m to 30 kPa·s/m. It is even more preferably 0.01 kPa·s/m to 15 kPa·s/m.

The air-flow resistance in the thickness direction of the fiber structure after the porous material B has been supported on the plurality of fiber structures is preferably 0.01 kPa·s/m to 50 kPa·s/m. It is even more preferably 0.01 kPa·s/m to 30 kPa·s/m. It is even yet more preferably 0.01 kPa·s/m to 15 kPa·s/m.

It is preferred for the air-flow resistance in the thickness direction to be 0.01 kPa·s/m to 50 kPa·s/m after the porous material A has been supported on the surfaces or between the voids of the fiber structure, and/or after the porous material B has been supported between the plurality of fiber structures, as this will facilitate diffusion of carbon dioxide in the porous materials A and B supported on the nonwoven fabric during adsorption of carbon dioxide.

The air-flow resistance of the fiber structure in the thickness direction of the fiber structure after supporting the

porous material A on the surface or between the voids of the fiber structure and/or after supporting the porous material B is measured by the following method.

Using a KES-F8 air permeability tester (product of Kato Tech Corp.), measurement is performed in a range of 1 m width × 50 cm length at a total of 200 locations (20 locations at equal spacings in the width direction of the fiber structure supporting the porous material A and/or the porous material B, each comprising 10 locations at equal spacings in the lengthwise direction), and the average value and standard deviation are recorded as the air-flow resistance and the standard deviation for air-flow resistance of the fiber structure (measurement area: 0.2πcm$^2$: 8.9 mm diameter).

According to one aspect, the carbon dioxide adsorbent of the embodiment comprises a plurality of fiber structures (for example, nonwoven fabrics), and a porous material B that forms a porous inorganic support layer between the plurality of fiber structures.

According to one aspect, the loading amount of the porous material B of the porous inorganic support layer with respect to the plurality of fiber structures is 10 g/m$^2$ to 500 g/m$^2$, and the air-flow resistance in the thickness direction of the fiber structure is 0.01 kPa·s/m to 50 kPa·s/m.

According to one aspect, the carbon dioxide adsorbent of the embodiment comprises a fiber structure such as a nonwoven fabric), and a porous material A supported on the surface or between the voids of the fiber structure.

According to one aspect, the porous material A is supported in the voids of the fiber structure at 50 vol% or greater with respect to the fiber structure, the loading amount of the porous material A with respect to the fiber structure is 10 g/m$^2$ to 500 g/m$^2$, and the air-flow resistance in the thickness direction of the fiber structure is 0.01 kPa·s/m to 50 kPa·s/m.

According to one aspect, the porous material A is supported in the voids of the fiber structure at 80 vol% or greater with respect to the fiber structure, the loading amount of the porous material A with respect to the fiber structure is 10 g/m$^2$ to 500 g/m$^2$, and the air-flow resistance in the thickness direction of the fiber structure is 0.01 kPa·s/m to 50 kPa·s/m.

According to one aspect, the carbon dioxide adsorbent of the embodiment comprises a plurality of fiber structures (such as nonwoven fabrics), and a porous material A supported on the surface or between the voids of at least one of the fiber structures.

According to one aspect, the porous material A is supported in the voids of the fiber structure at 50 vol% or greater with respect to the fiber structure, the loading amount of the porous material A with respect to the fiber structure is 10 g/m$^2$ to 500 g/m$^2$, and the air-flow resistance in the thickness direction of the fiber structure is 0.01 kPa·s/m to 50 kPa·s/m.

According to one aspect, the porous material A is supported in the voids of the fiber structure at 80 vol% or greater with respect to the fiber structure, the loading amount of the porous material A with respect to the fiber structure is 10 g/m$^2$ to 500 g/m$^2$, and the air-flow resistance in the thickness direction of the fiber structure is 0.01 kPa·s/m to 50 kPa·s/m.

The specific surface area of the porous inorganic particles in each of porous materials A and B is preferably 10 m$^2$/g to 4000 m$^2$/g. The specific surface area of the porous inorganic particles in each of porous materials A and B is more preferably 50 m$^2$/g to 3000 m$^2$/g. The specific surface area of the porous inorganic particles in each of porous materials A and B is even more preferably 80 m$^2$/g to 3000 m$^2$/g.

The specific surface area of the porous inorganic particles in each of the porous materials A and B is preferably 10 m$^2$/g or greater in order to allow increased adsorption of carbon dioxide when the porous inorganic particles themselves adsorb carbon dioxide, or when another adsorbent material is supported on the fiber structure. The specific surface area of the porous inorganic particles in each of the porous materials A and B is preferably 4000 m$^2$/g or lower in order to improve the diffusibility of carbon dioxide during repeated cycles of carbon dioxide adsorption and desorption.

The mean pore size of the porous inorganic particles in each of the porous materials A and B is preferably 0.1 nm to 100 nm. The mean pore size of the porous inorganic particles in each of the porous materials A and B is more preferably 1 nm to 50 nm. The mean pore size of the porous inorganic particles in each of the porous materials A and B is even more preferably 10 nm to 50 nm.

The mean pore size of the porous inorganic particles in each of the porous materials A and B is preferably 0.1 nm or greater since this will increase diffusion of carbon dioxide into the porous inorganic particles during adsorption and desorption of carbon dioxide. The mean pore size of the porous inorganic particles in each of the porous materials A and B is also preferably 100 nm or lower, in order to increase the specific surface area of the porous inorganic particles in each of the porous materials A and B, and to allow the porous inorganic particles themselves to adsorb carbon dioxide, or to increase the adsorption of carbon dioxide when a separate adsorbent material is supported on the nonwoven fabric.

The porous inorganic particles in each of the porous materials A and B may have pores with a mean pore size of 0.1 nm to 100 nm, macropores with a mean pore size of 100 nm to 3 μm, and mesopores with a mean pore size of 1 nm to 30 nm. The porous inorganic particles in each of the porous materials A and B preferably have macropores with a mean pore size of 100 nm to 3 μm and mesopores with a mean pore size of 1 nm to 30 nm, in addition to pores with a mean pore size of 0.1 nm to 100 nm, in order to speed diffusion of carbon dioxide into the pores of the porous inorganic particles during adsorption and desorption of carbon dioxide.

The pore volume of the porous inorganic particles in each of the porous materials A and B is preferably 0.1 ml/g to 5 ml/g. The pore volume of the porous inorganic particles in each of the porous materials A and B is more preferably 0.3 ml/g to 3 ml/g. The pore volume of the porous inorganic particles in each of the porous materials A and B is even more

preferably 0.5 ml/g to 2 ml/g.

The pore volume of the porous inorganic particles in each of the porous materials A and B is preferably 0.1 ml/g or greater in order to allow the porous inorganic particles themselves in each of the porous materials A and B to adsorb carbon dioxide, or to increase the adsorption of carbon dioxide when a separate adsorbent material is supported. The pore volume of the porous inorganic particles in each of the porous materials A and B is preferably 5 ml/g or lower in order to increase the strength of the porous inorganic particles in each of the porous materials A and B and improve the durability.

The mean pore size, pore volume and specific surface area of the porous inorganic particles in each of the porous materials A and B are measured in the following manner.

The mean pore size, pore volume and specific surface area of the porous inorganic particles in each of the porous materials A and B are measured using a specific surface area/pore distribution analyzer (trade name: TriStarII by Micromeritics, Japan). After drying 0.2 g of the porous inorganic particles in each of the porous materials A and B for 2 hours in a vacuum at 120°C, liquid nitrogen is introduced into the dried porous inorganic particles. The adsorption of nitrogen gas onto the porous inorganic particles at the boiling point of liquid nitrogen is measured at 23 points by the multipoint method, with a relative vapor pressure (P/P0) in the range of 0.05 to 0.2.

The mean pore size (nm) and pore volume (ml/g) are then calculated by the BJH (Barret-Joyner-Halenda) method using the program bundled with the apparatus. The BET specific surface area ($m^2/g$) is calculated by the BET (Brunauer-Emmett-Teller) method using the program bundled with the apparatus.

(Compound with amino group)

From the viewpoint of increasing $CO_2$ adsorption and serving as an inorganic binder, the compound with an amino group in the carbon dioxide adsorbent of the embodiment is preferably supported on the porous material A and/or B. The compound with an amino group may be any compound that can reversibly desorb carbon dioxide. For example, the compound may be one that can adsorb and desorb carbon dioxide by the amino group in the compound with an amino group.

Examples of compounds with amino groups for the embodiment include amine compounds such as N, N'-bis(3-aminopropyl)ethylenediamine, diethylenediamine, diethylenetriamine, tetraethylenepentamine, pentaethylenehexamine, polyethyleneimine (PEI), polypropyleneimine, polyallylamine, monoethanolamine, diethanolamine, triethanolamine, 2-ethylaminoethanol, N-methyldiethanolamine, N-ethyldiethanolamine, N,N-dimethylaminoethanol, N-(β-aminoethyl)ethanolamine, N-(β-aminoethyl)propanolamine, diethylisopropanolamine, tris(2-aminoethyl)amine, isophoronediamine, 1,4-bis(3-aminoethyl)piperazine, 1,4-bis(3-aminopropyl)piperazine, N,N-bis(3-aminopropyl)-N,N-bis(3-aminopropyl)piperazine, hydroxyethylpiperazine, 2-aminoethylaminopropyldimethoxysilane (AEAPDMS), 2-aminoethylaminopropyltrimethoxysilane, 3-aminopropyldimethoxysilane, 3-aminopropyltrimethoxysilane, lysine and aziridine.

The compound with an amino group may be converted from a primary amino group to a secondary amino group or further converted from a secondary amino group to a tertiary amino group, using an epoxy compound or urethane compound. The use of an epoxy compound or urethane compound for conversion from a primary amino group to a secondary amino group and further conversion from a secondary amino group to a tertiary amino group is preferred because it increases desorption of carbon dioxide for the embodiment, allowing the durability of the amine compound to be improved.

Examples of epoxy compounds include ethylene oxide, propylene oxide, 1,2-epoxybutane, 1,2-epoxypentane, 1,2-epoxyhexane, 1,2-epoxyheptane, 1,2-epoxyoctane, ethyl glycidyl ether, propyl glycidyl ether, allyl glycidyl ether, glycidyl butyl ether, glycidyl hexyl ether, glycidyl octyl ether, 2-ethylhexyl glycidyl ether, benzyl glycidyl ether, 1,4-butanediol diglycidyl ether, t-butyl glycidyl ether, 3-glycidyloxypropyltrimethoxysilane, 3-glycidyloxypropyltriethoxysilane, 3-glycidyloxypropylmethyldimethoxysilane and 3-glycidyloxypropylmethyldiethoxysilane.

The amount of the epoxy compound reacted with respect to the amine compound is not particularly restricted, and the reaction amount may be determined based on the molar equivalents of the primary amino and secondary amino groups of the amine compound. It is preferably determined based on the molar equivalents of primary amino groups. For protection of a primary amine, it is preferably added at from 0.8 molar equivalents to 1.2 molar equivalents with respect to the molar equivalents of the primary amine.

The reaction between the amine compound and the epoxy reaction product may be carried out, for example, by gradually adding and stirring the epoxy compound to a solution of the amine compound in an alcohol such as methanol or ethanol, to obtain a reaction product of the amine compound and the epoxy compound.

These amino group-containing compounds may be used alone, or compounds with two or more amino groups may be used in combination. Preferred among these as compounds with two or more amino groups are compounds having a polyamine such as tetraethylenepentamine, pentaethylenehexamine, polyethyleneimine (PEI), polypropyleneimine or polyallylamine, or having a piperazine ring such as 1,4-bis(3-aminoethyl)piperazine, 1,4-bis(3-aminopropyl)piperazine (BAPPRZ), N,N-bis(3-aminopropyl)-N,N-bis(3-aminopropyl)piperazine or hydroxyethylpiperazine, and compounds having a primary amino group on the amine compound protected using various epoxy compounds, from the viewpoint of

adsorptive power and ease of desorption of carbon dioxide.

Compounds with amino groups include polyethyleneimine (PEI) (trade name: SP-006, product of Nippon Shokubai Co., Ltd.) and 1,4-bis(3-aminopropyl)piperazine (trade name: BAPPRZ, product of Koei Chemical Co., Ltd.).

The method of supporting the compound with an amino group on the porous material A and/or B may be a method of supporting the compound with an amino group on the porous material A and/or B by impregnating a fiber structure comprising the porous material A and/or B with a solution dissolving a compound having a polyamine such as tetraethylenepentamine, pentaethylenehexamine, polyethyleneimine (PEI), polypropyleneimine or polyallylamine or having a piperazine ring such as 1,4-bis(3-aminoethyl)piperazine, 1,4-bis(3-aminopropyl)piperazine, N,N-bis(3-amino-propyl)-N,N-bis(3-aminopropyl)piperazine or hydroxyethylpiperazine, or a compound having a primary amino group in an amine compound protected using any of various epoxy compounds, and/or an amino-based alkoxysilane such as 2-aminoethylaminopropyldimethoxysilane, 2-aminoethylaminopropyltrimethoxysilane, 3-aminopropyldimethoxysilane or 3-aminopropyltrimethoxysilane, in a solvent such as ethanol, and drying it.

In addition, lysine and aziridine may be graft polymerized onto the fiber structure comprising the porous material A and/or B to load an amino group-containing compound onto the porous material A and/or B.

The loading amount of the compound with an amino group with respect to the unit mass of the carbon dioxide adsorbent of the embodiment is preferably 0.01 mmol/g to 100 mmol/g, more preferably 1 mmol/g to 30 mmol/g and particularly preferably 6 mmol/g to 30 mmol/g.

The loading amount of the compound with an amino group with respect to the carbon dioxide adsorbent of the embodiment is the loading amount of the amino group in the compound with respect to the carbon dioxide adsorbent comprising the porous material A and/or B.

The loading amount of the amino group in the compound with an amino group per unit mass of the carbon dioxide adsorbent comprising the amino group porous material A and/or B can be measured by a publicly known method.

When the fiber structure of the embodiment does not comprise nitrogen, for example, the nitrogen content is measured by measuring the fiber structure supporting the compound with an amino group by the Kjeldahl method or combustion method.

A calibration curve is then drawn between the absorbance of the peak attributed to the amino group determined using an infrared spectrometer, and the nitrogen content of the fiber structure comprising the porous material A and/or B as determined by the Kjeldahl method or combustion method.

The loading amount of the amino group in the compound with an amino group with respect to the unit mass of the carbon dioxide adsorbent can be determined by using the calibration curve and an infrared spectrometer to determine the loading amount of the amino group in the compound with an amino group, and normalizing it with respect to the weight of the fiber structure comprising the porous material supporting the compound with an amino group.

For example, when the fiber structure comprising the porous material A and/or B of the embodiment comprises nitrogen, the nitrogen contents are determined by the Kjeldahl method or combustion method for both the fiber structure comprising the porous material A and/or B supporting the compound with an amino group and the fiber structure comprising the porous material without an amino group. Specifically, the amount of nitrogen is determined in both the fiber structure comprising a porous material without an amino group, and the fiber structure comprising the porous material A and/or B supporting a compound with an amino group. The amount of nitrogen in the compound with an amino group is determined by subtracting the amount of nitrogen in the fiber structure comprising the porous material A and/or B from the amount of nitrogen in the fiber structure comprising the porous material supporting the compound with an amino group.

Next, similar to when the fiber structure comprising the porous material A and/or B does not comprise nitrogen, a calibration curve is drawn for the absorbance of the peak attributed to the amino group determined using an infrared spectrometer, and the amount of nitrogen in the fiber structure comprising the porous material A and/or B supporting a compound with an amino group, as determined by the Kjeldahl method or combustion method.

The loading amount of the amino group in the compound with an amino group with respect to the unit mass of the carbon dioxide adsorbent can be determined by using the calibration curve and infrared spectrometer to determine the loading amount of the compound with an amino group in the fiber structure, and normalizing it with respect to the weight of the fiber structure comprising the porous material supporting the compound with an amino group.

The compound with an amino group is preferably supported in a range of 10 mass% to 300 mass%, and more preferably in a range of 50 mass% to 300 mass%, with respect to the porous material A and/or B of the embodiment.

The loading amount of the compound with an amino group with respect to the porous material A and/or B of the embodiment is the loading amount of the amino group in the compound with an amino group, with respect to the porous material A and/or B.

The loading amount of the amino group in the compound with an amino group with respect to the unit mass of the porous material A and/or B can be determined by first determining the loading amount of the compound with an amino group in the fiber structure by the method described above, and normalizing it by the weight of the porous material A and/or B supporting the compound with an amino group.

(Silicone compound)

From the viewpoint of increasing the $CO_2$ adsorption and desorption rates, and of improving the diffusibility of carbon dioxide inside the carbon dioxide adsorbent layer, the carbon dioxide adsorbent of the embodiment preferably comprises at least one type of silicone compound selected from the group consisting of silicone oil, silsesquioxane and MQ resins in the compound with an amino group.

Since the compound with an amino group is a water-soluble polymer, it is expected to have a high Solubility Parameter (SP) value (a parameter representing substance solubility), and the compound with an amino group also tends to have inferior gas permeability. A silicone compound, on the other hand, being a hydrophobic polymer, is expected to have a low SP value and to have more satisfactory gas permeability.

The present inventors have found that by adding at least one type of silicone compound selected from the group consisting of silicone oil, silsesquioxane and MQ resins to the carbon dioxide adsorbent of the embodiment, in a compound with an amino group, it is possible to increase the diffusibility of carbon dioxide in the compound with an amino group.

Examples of silicone compounds include silicone oils such as dimethylsiloxane, methylphenylsiloxane, diphenylsiloxane, dimethylsiloxane partially modified with amino, epoxy, allyl, carbinol, carboxyl, ether, aralkyl, long-chain alkyl and ester groups, methylphenylsiloxane and phenylsiloxane, and silsesquioxane or MQ resins having methyl, ethyl, propyl, phenyl, amino, epoxy, allyl, carbinol, carboxyl, ether, aralkyl, long-chain alkyl and ester groups. A silicone oil, silsesquioxane or MQ resin may also comprise a "silicone rubber" compound.

The content of the silicone compound with respect to the compound with an amino group is preferably 1 mass% to 90 mass%. The content of the silicone compound with respect to the compound with an amino group is more preferably 2 mass% to 60 mass%. The content of the silicone compound with respect to the compound with an amino group is even more preferably 5 mass% to 50 mass%.

The content of the silicone compound with respect to the compound with an amino group is preferably 1 mass% or greater in order to increase the $CO_2$ adsorption/desorption rate. The content of the silicone compound with respect to the compound with an amino group is also preferably 90 mass% or lower in order to increase the amount of $CO_2$ adsorption.

The method of adding the silicone compound to the compound with an amino group may be any desired method. For example, by mixing a surfactant with the silicone compound and emulsifying it, it is possible to form an emulsion, thereby allowing the hydrophobic silicone compound to also be added in any proportion in the hydrophilic compound with an amino group.

A commercially available silicone emulsion may also be used as an emulsified or emulsion-converted silicone compound.

Commercially available silicone emulsions include a dimethylsilicone emulsion or a silicone emulsion modified with any of various functional groups (trade name: MF-14ES) by Shin-Etsu Chemical Co., Ltd., any of the DOWSIL emulsions by Toray-Dow, and BELSIL by Wacker Asahi Kasei Silicone Co., Ltd.

In order to increase carbon dioxide adsorption, an inorganic alkali such as sodium hydroxide, sodium carbonate, sodium hydrogen carbonate, potassium hydroxide or potassium carbonate and potassium hydrogen carbonate, or a glycol such as polyethylene glycol or polypropylene glycol, may be added to the surfactant.

The method of supporting the compound with an amino group comprising a silicone compound on the porous material A and/or B may be a method in which a fiber structure comprising the porous material A and/or B is impregnated with a solution comprising a mixture of the compound with an amino group and the silicone compound dissolved in a solvent such as ethanol, and dried, to support the compound with an amino group comprising the silicone compound on the porous material A and/or B.

[Method for producing carbon dioxide adsorbent]

The method for producing a carbon dioxide adsorbent according to the embodiment comprises a step of fabricating a fiber structure, and a step of adding a porous material A to the fiber structure.

According to one aspect, the method for producing a carbon dioxide adsorbent of the embodiment comprises a step of fabricating a fiber structure, and a step of forming a porous inorganic support layer comprising porous material B within the fiber structure.

According to one aspect, the method for producing a carbon dioxide adsorbent of the embodiment comprises a step of fabricating a fiber structure, a step of adding porous material A to the fiber structure, and a step of forming a porous inorganic support layer comprising porous material B within the fiber structure.

The method for producing a carbon dioxide adsorbent of the embodiment may also comprise a step of adding a compound with an amino group to the porous material A and/or porous material B supported on the fiber structure.

The method for producing a carbon dioxide adsorbent of the embodiment may further comprise a step of adding a silicone compound to the compound with an amino group in the porous material A and/or porous material B supported on the fiber structure.

The method for producing a carbon dioxide adsorbent of the embodiment may also comprise a step after the fiber structure has been produced (a post-step).

· Step of producing fiber structure

The step of producing a fiber structure such as a nonwoven fabric to serve as the substrate may be carried out by a publicly known method using various materials such as polypropylene, polyesters (for example, polyethylene terephthalate (PET)), nylon and cellulose.
The method for producing such a fiber structure may generally be selected according to the purpose, from among production methods known to those skilled in the art.
For example, when producing a nonwoven fabric using fibers such as thermoplastic polypropylene, polyester or nylon, production may be accomplished by any of various known methods such as a spunbond method or melt blowing method.
In a spunbond method, for example, a resin obtained by melting a starting resin with an extruder is continuously spun and directly opened and accumulated on a net to form a web, after which it is bonded onto a sheet to obtain a nonwoven fabric.
In a melt blowing method, for example, during continuous spinning of the resin obtained by melting a starting resin with an extruder, a filament may be narrowed and accumulated on a sheet using high-temperature air blasted from the periphery of the spinning nozzle, to obtain a nonwoven fabric. In melt blowing, the filament may be stretched with air to reduce the fiber diameter of the nonwoven fabric.
A nonwoven fabric or paper sheet of staple fibers can be obtained by a dry method or wet method.
A dry method is a method in which staple fibers of 15 mm to 100 mm are arranged in a fixed direction or randomly with "carding" or with an "airlaying" air stream, to produce a staple fiber nonwoven fabric.
A wet method is a method in which, when paper or glass is to be formed into a nonwoven fabric, a dispersion comprising staple fibers of about 15 mm to 100 mm dispersed in water is filtered out onto a mesh-like net to form a fleece, thereby obtaining a staple fiber nonwoven fabric.
A method of using cellulose fibers to produce a nonwoven fabric of long fibers may be, for example, a method of dissolving cellulose in a copper-ammonia solution and solidifying with deammoniation, to obtain a nonwoven fabric of long fibers.
The spinning method for production of the nonwoven fabric of the long fibers may be, for example, flow tension spinning with discharge from a nozzle in a filamentous form into hot water in a funnel, air-gap spinning with discharge into air, or electrospinning with application of an electrical charge to the feed solution to cause thinning.
As a specific example of flow tension spinning, a feed solution obtained by dissolving contaminant-removed and polymerization degree-adjusted cotton linter in a copper-ammonium solution, may be extruded through a spinneret having narrow holes (feed solution discharge holes), while dropping it into a spinning funnel together with water, and the feed solution may be deammoniated and coagulated to obtained fibers. The obtained fibers may then be stretched and deposited onto a net and spun into a web.
During this time, vibration of the net in the direction perpendicular to the machine direction as the net proceeds produces a sine curve in the fibers that are being loaded onto the net. A web spun under the same conditions is further layered over the single-layer web, to finally obtain a nonwoven fabric composed of a cellulosic continuous long fiber web with a plurality of overlapping layers.
The obtained cellulosic continuous long fiber web is regenerated with dilute sulfuric acid, and after washing, the fibers of the obtained regenerated cellulosic continuous long fiber web are tangled using a high-pressure water jet on a sheet with open holes, after which hot air drying is carried out to obtain a nonwoven fabric composed of the regenerated cellulosic continuous long fibers.
Adjustment of the fiber diameter of the fiber structure is accomplished by adjusting the draw ratio during spinning of the fiber structure. Adjustment of the draw ratio may be accomplished, for example, by varying the shape of the spinning funnel and the amount of spinning water flowing through it.
The basis weight of the fiber structure is adjusted by adjusting the thickness of the fiber structure. Adjustment of the thickness of the fiber structure may be accomplished as desired by varying the speed of progression of the spinning net.
By controlling the net vibration width, it is possible to control the fiber orientation direction and to control the strength and ductility of the fiber structure.
The void ratio of the fiber structure is adjusted by adjusting the basis weight, thickness and diameters of the filaments composing the fibers of the fiber structure. By compressing the nonwoven fabric with a compression roll, for example, in a step after production of the nonwoven fabric, it is possible to reduce the thickness and lower the void ratio.

· Step of adding porous material A to fiber structure

The step of adding the porous material A to the fiber structure is a step of loading the porous material A on the surface or between the voids of the fiber structure.

A publicly known method may be employed for the step of loading the porous material A on the surface or between the voids of the fiber structure.

For example, porous inorganic particles having a mean particle size of 0.1 μm to 30 μm may be dispersed in water or an organic solvent such as methanol or ethanol by stirring or with a homogenizer, to obtain a dispersion. After then adding a sol comprising porous inorganic particles with a mean particle size of 1 nm to 400 nm to the dispersion while stirring, a dispersing agent may be added to obtain a dispersion stably comprising the porous material A.

The following may be the method used for loading the dispersion comprising the porous material A on the surface or between the voids of the fiber structure, such as a nonwoven fabric. For example, a dispersion comprising the porous material A may be coated or sprayed onto the fiber structure and then dried to load the porous material A on the surface or between the voids of the fiber structure. Another method is to impregnate the fiber structure with a dispersion comprising the porous material A and then to dry it in order to load the porous material A on the surface or between the voids of the fiber structure.

· Step of forming porous inorganic support layer comprising porous material B within the fiber structure

The step of forming a porous inorganic support layer comprising the porous material B in a fiber structure such as a nonwoven fabric is a step of producing a fiber structure sandwiching the porous material B, and any publicly known method may be used.

For example, a powder comprising porous particles with a mean particle size of 30 μm to 3 mm and a hot-melt material may be mixed to obtain a mixture. Water may also be added in any desired proportion during the mixing to prevent static electricity.

The obtained mixture of porous inorganic particles with a mean particle size of 30 μm to 3 mm and a hot-melt material may be supplied in a fixed amount to a single nonwoven fabric and sandwiched using a separate nonwoven fabric, and the stack then contact bonded with a heated roll to form a porous inorganic support layer comprising the porous material B between the nonwoven fabrics.

The fiber structure comprising both the porous material A and porous material B can be obtained by the method described above, fabricating a fiber structure having the porous inorganic support layer comprising the porous material B formed within the fiber structure, and then carrying out a step of adding the porous material A to the obtained fiber structure.

- · Step of adding compound with amino group to porous material A or porous material B supported on fiber structure
- · Step of adding silicone compound to compound with amino group in porous material A or porous material B supported on fiber structure

The method of loading the compound with an amino group and/or the silicone compound on the fiber structure comprising the porous material A in this step is a method in which the fiber structure on which the porous material A has been supported is dried, and then the fiber structure on which the porous material A has been supported is impregnated with a solution or dispersion comprising a mixture of the compound with an amino group and/or the silicone compound, and then dried.

The method of simultaneously loading the porous material A, the compound with an amino group and/or the silicone compound on the nonwoven fabric in this step is a method in which the fiber structure is impregnated with a solution or dispersion comprising a mixture of the compound with an amino group and/or the silicone compound with the dispersion comprising the porous material A, and then dried.

The method of loading the compound with an amino group and/or the silicone compound on the fiber structure sandwiching the porous material B in this step is a method in which the fiber structure sandwiching the porous material B is dried, and then the fiber structure sandwiching the porous material B is impregnated with a solution or dispersion comprising a mixture of the compound with an amino group and/or the silicone compound, and then dried.

When a carbon dioxide adsorbent comprising both the porous material A and porous material B is to be obtained, the method for producing the carbon dioxide adsorbent of the embodiment comprises a step of fabricating a fiber structure, a step of adding the porous material A to the fiber structure, and a step of forming a porous inorganic support layer comprising the porous material B within the fiber structure.

The carbon dioxide adsorbent comprising both the porous material A and porous material B can be obtained by the method described above, fabricating a fiber structure having the porous inorganic support layer comprising the porous material B formed within the fiber structure, and then carrying out a step of adding the porous material A to the fabricated

fiber structure.

A carbon dioxide adsorbent comprising both the porous material A and porous material B, and further comprising a compound with an amino group and/or a silicone compound, can be obtained by first obtaining a fiber structure comprising both the porous material A and porous material B, and then carrying out:

a step of adding a compound with an amino group to the porous material A or porous material B supported on the fiber structure, and
a step of adding a silicone compound to the compound with an amino group in the porous material A and/or porous material B supported on the fiber structure.

<Module>

According to one aspect, the module of the embodiment has at least one layer of a carbon dioxide adsorbent. The carbon dioxide adsorbent of the embodiment in the module of the embodiment is the same as described above.

According to one aspect, the module of the embodiment has at least one layer of a spacer.

According to one aspect, the module of the embodiment has a layered structure in which at least one layer of a carbon dioxide adsorbent and at least one layer of a spacer are stacked.

(Spacer)

The spacer serves as a fluid channel through which air flows, in order to cause the carbon dioxide in air to be adsorbed onto the carbon dioxide adsorbent.

According to one aspect, the spacer is preferably a woven fabric or molded article.

According to one aspect, from the viewpoint of air permeability, the spacer is more preferably a woven fabric or molded article having a height difference between the warp yarn and weft yarn of 1 μm to 1 mm in the thickness direction, and having an open area ratio of 20% to 90%.

According to one aspect, the module of the embodiment preferably has a spacer which is a woven fabric or compact having a height difference between the warp yarn and weft yarn of 1 μm to 1 mm in the thickness direction, and having an open area ratio of 20% to 90%.

(Layered structure)

In a first aspect, the layered structure is a structure in which at least one layer of the carbon dioxide adsorbent of the embodiment (a carbon dioxide adsorbent layer, according to one aspect) and at least one layer of the spacer (a spacer layer according to one aspect) are stacked.

According to one aspect, the layered structure is preferably a structure in which one to five layers of the carbon dioxide adsorbents of the embodiment (carbon dioxide adsorbent layers, according to one aspect) and at least one layer of the spacer (a spacer layer according to one aspect) are stacked.

According to one aspect, the layered structure may have layers of the carbon dioxide adsorbent that have been processed for irregularities with a height difference of 3 μm or greater on the surface. In the case of a layered structure with carbon dioxide adsorbent layers that have been processed for irregularities, it may either have or lack a spacer layer.

The processing for irregularities may be carried out by a common method such as embossing.

By having a layered structure, the module of the embodiment can be more suitably used for adsorption of carbon dioxide in the atmosphere.

According to one aspect, the ratio of the carbon dioxide adsorbent layer/spacer layer in the thickness direction is preferably 0.1 to 20 and more preferably 1 to 20. It is preferably 0.1 or higher from the viewpoint of carbon dioxide adsorption efficiency, and it is preferably 20 or lower from the viewpoint of pressure loss inside the module.

In a second aspect, the layered structure is a structure wrapped in a spiral fashion around a tube.

A module having such a layered structure may have a spiral form in which the layered structure comprising a carbon dioxide adsorbent layer and a spacer layer is wrapped around the outer periphery of a hollow gas collecting tube having a plurality of holes formed on the wall face.

In a third aspect, the module of the embodiment employs at least one layer of the carbon dioxide adsorbent of the embodiment, and it has a corrugated structure. According to one aspect, the module of the embodiment may be a corrugated structure obtained by stacking at least one layer of a carbon dioxide adsorbent of the embodiment. According to one aspect, the module of the embodiment is a corrugated layered body formed by layering a core part and a liner part.

According to one aspect, the corrugated structure comprises a core part and a liner part. According to one aspect, the module of the embodiment having a corrugated structure employs a carbon dioxide adsorbent of the embodiment for both the core part and the liner part. According to one aspect, the module of the embodiment has a structure in which at

least one layer of the carbon dioxide adsorbent or fiber structure of the embodiment having a wavy corrugated form, is bonded with a liner part.

The core part used may be a carbon dioxide adsorbent according to the embodiment.

The liner part used may be at least one layer of one or more selected from the group consisting of the carbon dioxide adsorbent of the embodiment, spacers, nonwoven fabrics, meshes and porous sheets.

According to one aspect, the module of the embodiment having a corrugated structure may employ as the liner part one or more selected from the group consisting of meshes (such as a polyethylene terephthalate (PET) mesh), nonwoven fabrics and porous sheets.

The peak height of the corrugated structure is preferably 0.5 mm to 10 mm. The height is more preferably 1 mm to 5 mm.

The peak height of the corrugated structure is preferably 0.5 mm or greater because pressure loss will be reduced when air is circulated through the module, and it is preferably 10 mm or smaller because capture efficiency for carbon dioxide in the air will be increased.

The width of the corrugated structure is preferably 1 mm to 20 mm. The width is more preferably 1.5 mm to 10 mm.

The width of the corrugated structure is preferably 1 mm or greater because pressure loss will be reduced when air is circulated through the module, and it is preferably 20 mm or smaller because capture efficiency for carbon dioxide in the air will be increased.

The open area ratio in the corrugated structure is preferably 10% to 70%, more preferably 15% to 60% and even more preferably 20% to 50%. This range is preferred in order to maintain low pressure loss during flow of air while increasing $CO_2$ adsorption.

The corrugated structure may be a laminated sheet product cut to a specified size, or a roll-like corrugated structure wrapped around a core with a cylindrical structure.

[Method for producing module]

The method for producing a module according to the embodiment comprises a step of fabricating a carbon dioxide adsorbent of the embodiment, and a step of layering the carbon dioxide adsorbent of the embodiment, and/or a spacer. The step of fabricating the carbon dioxide adsorbent is the same as described above.

The spacer used in the module of the embodiment may be any of various publicly known woven fabrics or molded articles.

Specifically, there may be used a woven fabric or molded article obtained by plain weaving, twill weaving or satin weaving of various types of fibers including polyolefins such as polyethylene or polypropylene, polyesters such as polyethylene terephthalate, polybutylene terephthalate and polyethylene naphthalate, copolymers such as polyethylene phthalate, polybutylene phthalate and polyethylene naphthalate, polyphenylene sulfide, polyvinylidene chloride, nylon, fluorine resins, stainless steel and glass. By changing the fiber diameter and weaving method for the fibers, it is possible to control the thickness of the spacer, the aperture, the height difference for warp yarn and weft yarn, and the open area ratio.

· Step of layering carbon dioxide adsorbent and/or spacer of the embodiment

The step of layering the carbon dioxide adsorbent and/or the spacer is as follows.

In a first aspect, the fiber structure on which the porous material B is not supported (for example, a nonwoven fabric), or the fiber structure sandwiching the porous material B (for example, a nonwoven fabric), and the spacer sheet are cut to match the desired module size. One set is defined as a stack comprising a fiber structure without one or more porous materials B supported or a nonwoven fabric sandwiching one or more porous materials B, and one or more spacer sheets, layered over each other in a specified number. By layering a plurality of such sets fabricated by the same method it is possible to obtain a module suitable for the embodiment.

A module of the embodiment can be obtained by loading the porous material A and the compound with an amino group and/or silicone compound on the obtained layered body by the method described above.

In a second aspect, a fiber structure on which the porous material B is not supported (for example, a nonwoven fabric), or a fiber structure sandwiching the porous material B, and a spacer sheet, each prepared as a roll, may be wrapped in a spiral fashion around a tube made of a resin or stainless steel, to obtain a spiral-like layered module suitable for the embodiment.

The fiber structure on which the porous material B is not supported or the fiber structure sandwiching the porous material B, and the spacer sheet, may each be used as a layered body prepared using a single roll or multiple rolls, and wrapped in a spiral fashion to obtain a spiral layered body.

A module of the embodiment can be fabricated by loading the porous material A and the compound with an amino group and/or silicone compound on the obtained spiral layered body by the method described above.

The module which is a spiral laminated body may be used by placement in a container for carbon dioxide

adsorption.

In a third aspect, it is possible to obtain a module having a suitable corrugated structure (a corrugated module) for the embodiment, by corrugated processing of a fiber structure in which the porous material B is not supported or a fiber structure sandwiching the porous material B into a roll with irregularities, while applying heat at 60°C to 200°C, using a spacer or a nonwoven fabric in which the porous material B is not supported, coated with an adhesive such as polyvinyl alcohol (PVA), or a fiber structure sandwiching the porous material B (for example, a nonwoven fabric), as a liner.

When the spacer, the fiber structure on which the porous material B is not supported, or the fiber structure sandwiching the porous material B, has a heat-fusible property of 60°C to 200°C, it may be used without treatment. When the spacer, the fiber structure on which the porous material B is not supported, or the fiber structure sandwiching the porous material B does not have a heat-fusible property at 60°C to 200°C, it may be used by coating an adhesive such as PVA at a loading amount of 5 $g/m^2$ to 50 $g/m^2$. The method of coating the adhesive may be a publicly known method. For example, it may be a method of coating a solution containing PVA by spraying.

When a layered corrugated structure is to be obtained, the fiber structure is cut to match the size of the module and coated with an adhesive such as PVA, and then layered.

When a cylindrical corrugated structure is to be obtained, a corrugated structure cut to a specified width and having an adhesive such as PVA coated on one side may be layered by wrapping around a cylindrical core, to obtain a module of the specified size.

Packing, for example, may be used to prevent air from being localized in air flow channels only at specific locations when the laminated module comprising the carbon dioxide adsorbent and spacer, the module serving as the spiral laminated body and the module with the laminated corrugated structure, are set in a carbon dioxide adsorbing vessel. A mesh or punching panel may also be added in the space from the air intake unit to the layered body and/or the space from the layered body to the air extraction outlet in the module, for pressure adjustment to homogenize air throughout the entire module.

<Use>

Since the carbon dioxide adsorbent and module of the embodiment have low pressure loss during $CO_2$ adsorption and a large specific surface area of the support, they can be efficiently used for $CO_2$ adsorption, separation and capture, and in particular they can be suitably used for direct capture of carbon dioxide in the atmosphere.

<Direct air capture (DAC) method>

According to one aspect, the direct air capture method (DAC) of the embodiment comprises an adsorption step in which carbon dioxide is adsorbed onto a carbon dioxide adsorbent in a module of the embodiment.

According to one aspect, the direct air capture (DAC) method of the embodiment comprises a desorption step in which the carbon dioxide is desorbed.

According to one aspect, the desorption step is a step in which the temperature or pressure is varied to cause desorption of the carbon dioxide.

According to one aspect, the direct air capture (DAC) method of the embodiment comprises a capture step in which the desorbed carbon dioxide is captured.

· Adsorption step

In this step, the carbon dioxide is adsorbed onto the carbon dioxide adsorbent of the embodiment, which selectively adsorbs carbon dioxide. The carbon dioxide adsorbent of the embodiment is the same as described above.

The adsorption method may be any one that allows contact between carbon dioxide in the air that has been taken up into the module, and the carbon dioxide adsorbent, with a dead-end type being preferred.

Adsorption can be accomplished by introducing air or nitrogen at a relative humidity of about 80% RH, for 1 minute to 10 hours, at a flow rate of 0.001 m/sec to 5 m/sec, at an atmospheric temperature of about -20 to 40°C and a relative humidity of 20% RH to 100% RH.

With the module of the embodiment, it is possible to adsorb carbon dioxide present in ordinary air, and carbon dioxide in air comprising large amounts of carbon dioxide emitted from exhaust gas. The suitable concentration range of carbon dioxide for use in this manner may be 300 ppm to 500 ppm, or 1 mass% to 30 mass%.

· Desorption step

In this step, the carbon dioxide adsorbed by the carbon dioxide adsorbent is desorbed by altering the temperature or pressure.

The desorption can be accomplished by introducing a gas such as nitrogen with a relative humidity of about 80% RH at a temperature of 50 to 130°C and a pressure of 1 kPa to 101 kPa, at a flow rate of 0.001 m/sec to 3 m/sec. The temperature is preferably increased after a state of reduced pressure, in order to increase the purity of the desorbed carbon dioxide.

Water vapor is preferably added simultaneously during desorption. By adding water vapor it is possible to add carbon dioxide adsorbent to the water, and to thus increase the desorption and adsorption of carbon dioxide during desorption and the next adsorption cycle.

(Capture step)

This is a step of capturing desorbed carbon dioxide.

<Use>

Since the direct air capture (DAC) method of the embodiment produces low pressure loss during $CO_2$ adsorption and has a large specific surface area for the support, it can be efficiently used for $CO_2$ adsorption, separation and capture, and can be suitably used for direct capture of carbon dioxide in the atmosphere.

The present disclosure further encompasses the following aspects.

[1] A carbon dioxide adsorbent comprising:

a plurality of nonwoven fabrics and
a porous material B that forms a porous inorganic support layer between the plurality of nonwoven fabrics, wherein:

the loading amount of the porous material B of the porous inorganic support layer is 10 g/m$^2$ to 500 g/m$^2$ with respect to the plurality of nonwoven fabrics, and
the air-flow resistance in the thickness direction of the plurality of nonwoven fabrics is 0.01 kPa·s/m to 50 kPa·s/m.

[2] A carbon dioxide adsorbent comprising:

a nonwoven fabric and
a porous material A supported on the surface or among voids of the nonwoven fabric, wherein
the porous material A is supported in the voids of the nonwoven fabric to an amount of 80 vol% or greater with respect to the nonwoven fabric, the loading amount of the porous material A being 10 g/m$^2$ to 500 g/m$^2$ with respect to the nonwoven fabric, and
the air-flow resistance in the thickness direction of the nonwoven fabric is 0.01 kPa·s/m to 50 kPa·s/m.

[3] The carbon dioxide adsorbent according to [1], comprising:

a plurality of the nonwoven fabrics and
a porous material A supported on the surface or among voids of at least one of the nonwoven fabrics, wherein
the porous material A is supported in the voids of each nonwoven fabric to an amount of 80 vol% or greater with respect to the nonwoven fabric, the loading amount of the porous material A being 10 g/m$^2$ to 500 g/m$^2$ with respect to the nonwoven fabric, and
the air-flow resistance in the thickness direction of the nonwoven fabric is 0.01 kPa·s/m to 50 kPa·s/m.

[4] A carbon dioxide adsorbent having a layered structure comprising at least one layer of the carbon dioxide adsorbent according to any one of [1] to [3].
*[5]* The carbon dioxide adsorbent according to any one of [1] to [3], wherein the porous material A comprises:

porous inorganic particles having a mean particle size of 0.1 μm to 30 μm, and
at least one type of porous inorganic particles selected from the group consisting of colloidal silica, colloidal alumina, and colloidal silica or colloidal alumina precursors having a mean particle size of 1 nm to 400 nm, and
the porous inorganic particles with a mean particle size of 0.1 μm to 30 μm are present at 10 mass% to 99 mass% with respect to 100 mass% of the porous material A.

[6] The carbon dioxide adsorbent according to any one of [1] to [3], wherein the porous inorganic support layer:

is formed of the porous material B comprising porous inorganic particles with a mean particle size of 30 μm to 3 mm and a hot-melt material having a melting point of 50°C to 150°C, and
comprises the hot-melt material at 1 mass% to 80 mass% with respect to the total of the porous inorganic particles and the hot-melt material.

[7] The carbon dioxide adsorbent according to any one of [1] to [3], wherein the porous inorganic particles comprising the porous materials A and B each:
have a BET specific surface area of 50 $m^2$/g to 3000 $m^2$/g and a mean pore size of 1 nm to 50 nm, and are of at least one type selected from the group consisting of silica, alumina, silica-alumina, titania, zirconia, activated carbon, zeolite, alkali metal ferrites and MOF.
[8] The carbon dioxide adsorbent according to any one of [1] to [3], wherein the mean fiber diameter of the nonwoven fabric is 1 μm to 50 μm, and the void ratio of the nonwoven fabric is 50% to 95%.
[9] The carbon dioxide adsorbent according to any one of [1] to [3], wherein a compound with an amino group is supported on the porous material A and/or B in a range of 10 mass% to 300 mass%.
[10] The carbon dioxide adsorbent according to [9], wherein the compound with an amino group comprises at least one type of silicone compound selected from the group consisting of silicone oil, silsesquioxane and MQ resins.
[11] The carbon dioxide adsorbent according to [10], which comprises the silicone compound at 1 mass% to 90 mass% in the compound with an amino group.
[12] A module for adsorption, separation and capture of carbon dioxide having a layered structure comprising at least one layer of a carbon dioxide adsorbent according to any one of [1] to [3] and at least one layer of a spacer.
[13] A module for adsorption, separation and capture of carbon dioxide having a corrugated structure employing at least one layer of a carbon dioxide adsorbent according to any one of [1] to [3].
[14] A method for direct air capture (DAC) in which carbon dioxide in the atmosphere is directly captured, the method comprising the following steps:

an adsorption step in which carbon dioxide is adsorbed onto the carbon dioxide adsorbent in the module for adsorption, separation and capture of carbon dioxide according to [13]; and
a desorption step in which the temperature or pressure is changed to desorb the carbon dioxide.

EXAMPLES

The embodiment will now be explained in more specific detail by Examples, with the understanding that the embodiment is in no way limited thereby.
Carbon dioxide adsorbents and modules were fabricated by the methods described in Examples 1 to 17 and Comparative Example 1.
For performance evaluation of the carbon dioxide adsorbents and modules of the Examples and Comparative Examples, the carbon dioxide adsorption step and desorption step were carried out by the following method, to determine the carbon dioxide adsorption and desorption of the carbon dioxide adsorbents and modules. The performance of each of the carbon dioxide adsorbents and modules of the Examples and Comparative Examples was evaluated by measuring pressure loss in the adsorption step.
The physical properties and performance of the carbon dioxide adsorbents and modules fabricated in the Examples and Comparative Examples are shown in Tables 1 and 2.

· Adsorption step

The carbon dioxide adsorbents obtained in Examples 1 to 14 (hereunder referred to as "samples") were each placed in a carbon dioxide adsorption vessel, and nitrogen at a temperature of 60°C and a relative humidity of 80% RH was introduced at a flow rate of 0.05 m/sec, desorbing the $CO_2$ adsorbed onto the sample during preparation of the sample.
The temperature was then lowered to 30°C, and air with a carbon dioxide concentration of 400 ppm and a relative humidity of 80% RH was circulated through the adsorption vessel at a flow rate of 0.05 m/sec, as a step of adsorbing carbon dioxide onto the sample. Specifically, the peak signal for carbon dioxide concentration of air discharged from the adsorption vessel was measured in real time using an infrared spectrometer (FT/IR6800, product of JASCO Corp.). The amount of discharged carbon dioxide was measured using the peak at 2349 $cm^{-1}$, and carbon dioxide was adsorbed onto the sample until the carbon dioxide concentration in the discharged air reached 400 ppm.
The amount of carbon dioxide adsorbed onto the sample is the difference between the carbon dioxide concentration of 400 ppm in the air discharged from the adsorption vessel, and the amount of carbon dioxide in the

air discharged from the adsorption vessel after an elapse of 2 hours, and this amount was applied and integrated over time by a known formula to determine the amount of carbon dioxide adsorbed onto the sample.

If the amount of carbon dioxide adsorbed onto the sample is 0.2 $CO_2$ mmol/g to 6 $CO_2$ mmol/g with respect to the porous material (g), then the nonwoven fabric (fiber structure) comprising the porous material can be suitably used as a carbon dioxide adsorbent for the embodiment.

If the amount of carbon dioxide adsorbed onto the sample is 10 $CO_2$ kg/$m^3$ to 50 $CO_2$ kg/$m^3$ with respect to the carbon dioxide adsorbent sheet ($m^3$), then the module can be suitably used as a module of the embodiment.

· Desorption step

Each of the samples obtained in the Examples and Comparative Examples was placed in a carbon dioxide adsorption vessel, nitrogen at a temperature of 60°C and a relative humidity of 80% RH was introduced into the adsorption vessel by mass flow at a flow rate of 3 m/sec, and the desorption amount of carbon dioxide adsorbed onto the sample was measured while carrying out desorption of the carbon dioxide adsorbed onto the sample.

Specifically, the desorption step was carried out until the amount of carbon dioxide discharged from the adsorption vessel reached a level of approximately zero in the nitrogen. The amount of carbon dioxide desorbed from the sample was determined by the following method.

An infrared spectrometer (FT/IR6800, product of JASCO Corp.) was used to measure the peak for nitrogen discharged from the adsorption vessel. The desorbed carbon dioxide amount was measured based on the peak at 2349 $cm^{-1}$, and calculation was performed by using the amount of carbon dioxide in the nitrogen discharged from the adsorption vessel in a known formula for integration over time.

Measurement of differential pressure (pressure loss)

A differential pressure gauge (product name: GC30, product of Nagano Keiki Co., Ltd.) was provided on the air intake side and outlet side of the adsorption vessel, and each of the modules of Examples 15 to 17 and Comparative Example 1 was used for measurement of the pressure loss when air was streamed at a wind speed of 0.3 m/s in the adsorption step, assigning an evaluation of G (acceptable) if the pressure loss was 1 kPa or lower and P (unacceptable) if the pressure loss was higher than 1 kPa.

The air-flow resistance of each of the carbon dioxide adsorbents prepared in the Examples was measured by the method described above.

The physical properties, including the fiber diameter, of each of the carbon dioxide adsorbents prepared in the Examples was also measured by the method described above.

The loading amount of amino groups in the compound with an amino group with respect to the carbon dioxide adsorbent or the porous material in the carbon dioxide adsorbent prepared in each of the Examples was measured by the method described above.

The physical properties such as mean particle size of the porous inorganic particles were also measured by the methods described above.

(Example 1)

A 100 g portion of zeolite 13X having a particle size of 1 mm, a pore size of 1 nm, a pore volume of 1 ml/g and a BET specific surface area of 700 $m^2$/g (product name: Mizuka Sieves, product of Mizusawa Industrial Chemicals, Ltd.) was crushed with a hammer mill by Labonect Co. to a mean particle size of 10 μm. The crushed zeolite 13X was slowly added to 1300 g of water while stirring, and dispersed in the water. To the obtained dispersion there was added 200 g of a 20 mass% concentration aqueous solution of colloidal silica with a particle size of 40 to 100 nm (product name: SNOWTEXUP, by Nissan Chemical Industries, Ltd.), and then 0.7 g of a dispersing agent (product name: SD-10, by Toagosei Co., Ltd.) was added to obtain a dispersion of the porous material A.

The numerical value for the particle size of the zeolite 13X of Example 1 listed in Table 1 is the numerical value for the particle size of the crushed zeolite 13X.

A nonwoven fabric comprising regenerated cellulose long fibers with a fiber diameter of 12 μm, a basis weight of 100 g/$m^2$, a void ratio of 88%, a specific surface area of 0.2 $m^2$/g and a thickness of 0.6 mm (product name: BEMLIESE by Asahi Kasei Corp.) was impregnated with the porous material A dispersion, and then dried at 150°C for 2 hours to obtain a cellulose nonwoven fabric having the porous material A supported at 80 g/$m^2$ (hereinafter referred to as "carbon dioxide adsorbent of Example 1" or "sample 1").

The porous material A was supported in the voids of the carbon dioxide adsorbent of Example 1, at 95 vol% with respect to the carbon dioxide adsorbent. The air-flow resistance of the carbon dioxide adsorbent of Example 1 was 0.56 kPa·s/m.

The amount of carbon dioxide adsorbed by sample 1 and the desorption amount of carbon dioxide adsorbed by sample 1 were each 0.4 $CO_2$ mmol/g with respect to the mass (g) of the cellulose nonwoven fabric supporting the porous material A.

(Example 2)

A powder of porous material B was prepared by mixing 500 g of zeolite 13X having a mean particle size of 1 mm, a pore size of 1 nm, a pore volume of 1 ml/g and a BET specific surface area of 700 $m^2/g$ (product name: Mizuka Sieves, by Mizusawa Industrial Chemicals, Ltd.), with 400 g of a polyethylene (PE)-based hot-melt material having a melting point of 110°C or higher (product of Asahi Kasei Corp.) in a mass ratio of 5:4.

The hot-melt material content ratio in the porous material B was 45 mass%.

The numerical value for the particle size of the zeolite 13X of Example 2 in Table 1 is the numerical value for the particle size of the zeolite 13X after mixture with the hot-melt material.

Porous material B powder was fed to a nonwoven fabric (product name: BEMLIESE, by Asahi Kasei Corp.) comprising regenerated cellulose long fibers with a fiber diameter of 6 μm, a basis weight of 50 $g/m^2$, a void ratio of 89%, a specific surface area of 0.6 $m^2/g$ and a thickness of 0.3 mm. The nonwoven fabric to which the porous material B powder had been fed, and a nonwoven fabric made of regenerated cellulose long fibers having a fiber diameter of 12 μm, a basis weight of 38 $g/m^2$, a void ratio of 92%, a specific surface area of 0.2 $m^2/g$ and a thickness of 0.3 mm (product name: BEMLIESE by Asahi Kasei Corp.) were used to sandwich porous material B, and the stack was hot rolled at 120°C to obtain a cellulose nonwoven fabric having a porous material B loading amount of 270 $g/m^2$ (hereinafter referred to as "carbon dioxide adsorbent of Example 2" or "sample 2").

The air-flow resistance of the carbon dioxide adsorbent of Example 2 was 6.3 kPa·s/m.

The amount of carbon dioxide adsorbed by sample 2 and the desorption amount of carbon dioxide adsorbed by sample 2 were each 0.4 $CO_2$ mmol/g with respect to the mass (g) of the cellulose nonwoven fabric supporting the porous material B (sample 2).

(Example 3)

A 100 g portion of silica with a mean particle size of 6.4 μm, a pore size of 21 nm, a pore volume of 1.6 ml/g and a BET specific surface area of 300 $m^2/g$ (product name: SILYSIA 370, by Fuji Silysia Chemical, Ltd.) was gradually added to 1300 g of water while stirring for dispersion. To the obtained dispersion there was added 200 g of a 20 mass% concentration aqueous solution of colloidal silica with a particle size of 40 to 100 nm (product name: SNOWTEX, by Nissan Chemical Industries, Ltd.), and then 0.7 g of a dispersing agent (product name: SD-10, by Toagosei Co., Ltd.) was added to obtain a dispersion comprising the porous material A.

A nonwoven fabric comprising regenerated cellulose long fibers with a fiber diameter of 12 μm, a basis weight of 100 $g/m^2$, a void ratio of 88%, a specific surface area of 0.2 $m^2/g$ and a thickness of 0.6 mm (product name: BEMLIESE by Asahi Kasei Corp.) was impregnated with the porous material A dispersion, and then dried at 150°C for 2 hours to obtain a cellulose nonwoven fabric having the porous material A supported at 60 $g/m^2$ (hereinafter referred to as "sample 3").

Polyethyleneimine (PEI) with a number-average molecular weight Mn of 600 (product name: SP-006, by Nippon Shokubai Co., Ltd.) was dissolved in ethanol to prepare an ethanol solution with a polyethyleneimine concentration of 25 mass%.

After then impregnating sample 3 with the ethanol solution, it was vacuum dried at 80°C for 4 hours to obtain sample 3 supporting polyethyleneimine (hereinafter referred to as "carbon dioxide adsorbent of Example 3").

The amount of polyethyleneimine supported on the carbon dioxide adsorbent of Example 3 was determined to be 8 mmol/g by weight measurement of the sample before and after loading the polyethyleneimine.

The loading amount of the compound with an amino group with respect to the porous material A in the carbon dioxide adsorbent of Example 3 was 92 mass%.

The porous material A was supported in the voids of the carbon dioxide adsorbent of Example 3, at 95 vol% with respect to the carbon dioxide adsorbent. The air-flow resistance of the carbon dioxide adsorbent of Example 3 was 0.54 kPa·s/m.

The amount of carbon dioxide adsorbed by the carbon dioxide adsorbent of Example 3 and the desorption of carbon dioxide adsorbed by the carbon dioxide adsorbent of Example 3 were each 2.0 $CO_2$ mmol/g with respect to the polyethyleneimine mass (g).

(Example 4)

A powder of porous material B was prepared by mixing 500 g of crushed type B silica gel having a mean particle size of 100 μm, a pore size of 6 nm, a pore volume of 0.8 ml/g and a BET specific surface area of 450 $m^2/g$ (Toyota Kako Co.,

Ltd.), with 400 g of a polyethylene (PE)-based hot-melt material having a melting point of 110°C or higher (product of Asahi Kasei Corp.) in a mass ratio of 5:4.
The hot-melt material content ratio in the porous material B was 45 mass%.

The powder was fed to a nonwoven fabric (product name: BEMLIESE, by Asahi Kasei Corp.) comprising regenerated cellulose long fibers with a fiber diameter of 6 μm, a basis weight of 50 g/$m^2$, a void ratio of 89%, a specific surface area of 0.6 $m^2$/g and a thickness of 0.3 mm, to a silica content of 150 g in the porous material B. The nonwoven fabric to which the porous material B powder had been fed, and a nonwoven fabric made of regenerated cellulose long fibers having a fiber diameter of 12 μm, a basis weight of 38 g/$m^2$, a void ratio of 92%, a specific surface area of 0.2 $m^2$/g and a thickness of 0.3 mm (product name: BEMLIESE by Asahi Kasei Corp.) were used to sandwich porous material B, and the stack was hot rolled at 120°C to obtain a cellulose nonwoven fabric having a porous material B loading amount of 270 g/$m^2$ (hereinafter referred to as "sample 4").

After then impregnating sample 4 with the ethanol solution of PEI prepared in Example 3, it was vacuum dried at 80°C for 4 hours to obtain sample 4 supporting polyethyleneimine (hereinafter referred to as "carbon dioxide adsorbent of Example 4").

The amount of polyethyleneimine supported on the carbon dioxide adsorbent of Example 4 was determined to be 7 mmol/g by weight measurement of the sample before and after loading the polyethyleneimine.

The loading amount of the compound with an amino group with respect to the porous material B in the carbon dioxide adsorbent of Example 4 was 72 mass%.

The air-flow resistance of the carbon dioxide adsorbent of Example 4 was 9.6 kPa·s/m.

The amount of carbon dioxide adsorbed by the carbon dioxide adsorbent of Example 4 and the desorption of carbon dioxide adsorbed by the carbon dioxide adsorbent of Example 4 were each 1.7 $CO_2$ mmol/g with respect to the polyethyleneimine mass (g).

(Example 5)

The sample 4 prepared in Example 4 was impregnated with the dispersion comprising the porous material A prepared in Example 3 and dried at 150°C for 4 hours to obtain a cellulose nonwoven fabric comprising porous materials A and B (hereunder referred to as "sample 5").

The loading amounts of the porous material A and porous material B in sample 5 were 60 g/$m^2$ and 270 g/$m^2$, respectively.

After then impregnating sample 5 with the ethanol solution of PEI prepared in Example 3, it was vacuum dried at 80°C for 4 hours to obtain sample 5 supporting polyethyleneimine (hereinafter referred to as "carbon dioxide adsorbent of Example 5").

The amount of polyethyleneimine supported on the carbon dioxide adsorbent of Example 5 was determined to be 7 mmol/g by weight measurement of the sample before and after loading the polyethyleneimine.

The loading amount of the compound with an amino group with respect to the porous materials A and B in the carbon dioxide adsorbent of Example 5 was 60 mass%.

The porous material A was supported in the voids of the carbon dioxide adsorbent of Example 5, at 98 vol% with respect to the carbon dioxide adsorbent. The air-flow resistance of the carbon dioxide adsorbent of Example 5 was 11.2 kPa·s/m.

The amount of carbon dioxide adsorbed by the carbon dioxide adsorbent of Example 5 and the desorption of carbon dioxide adsorbed by the carbon dioxide adsorbent of Example 5 were each 1.6 $CO_2$ mmol/g with respect to the polyethyleneimine mass (g).

(Example 6)

A powder of porous material B was prepared by mixing 1200 g of globular porous silica having a mean particle size of 100 μm, a pore size of 15 nm, a pore volume of 1.2 ml/g and a BET specific surface area of 300 $m^2$/g (product name: CARiACT Q15, by Fuji Silysia Chemical, Ltd.), with 960 g of a polyethylene (PE)-based hot-melt material having a melting point of 110°C or higher (product of Asahi Kasei Corp.) in a mass ratio of 5:4.

The hot-melt material content ratio in the porous material B was 45 mass%.

The powder of porous material B was fed to a nonwoven fabric (product name: BEMLIESE, by Asahi Kasei Corp.) comprising regenerated cellulose long fibers with a fiber diameter of 6 μm, a basis weight of 50 g/$m^2$, a void ratio of 89%, a specific surface area of 0.6 $m^2$/g and a thickness of 0.3 mm, to a silica content of 120 g in the porous material B.

The nonwoven fabric to which the porous material B powder had been fed, and a nonwoven fabric made of regenerated cellulose long fibers having a fiber diameter of 12 μm, a basis weight of 38 g/$m^2$, a void ratio of 92%, a specific surface area of 0.2 $m^2$/g and a thickness of 0.3 mm (product name: BEMLIESE by Asahi Kasei Corp.) were used to sandwich porous material B, and the stack was hot rolled at 120°C to obtain a cellulose nonwoven fabric having a porous

material B loading amount of 216 g/m$^2$.

A cellulose nonwoven fabric sandwiching porous material B was impregnated with the dispersion comprising porous material A prepared in Example 3, and dried at 150°C for 4 hours, to obtain a cellulose nonwoven fabric comprising porous materials A and B (hereunder referred to as "sample 6").

The loading amounts of the porous material A and porous material B in sample 6 were 60 g/m$^2$ and 216 g/m$^2$, respectively.

After then impregnating sample 6 with the ethanol solution of PEI prepared in Example 3, it was vacuum dried at 80°C for 4 hours to obtain sample 6 supporting polyethyleneimine (hereinafter referred to as "carbon dioxide adsorbent of Example 6").

The amount of polyethyleneimine supported on the carbon dioxide adsorbent of Example 6 was determined to be 8 mmol/g by weight measurement of the sample before and after loading the polyethyleneimine.

The loading amount of the compound with an amino group with respect to the porous materials A and B in the carbon dioxide adsorbent of Example 6 was 70 mass%.

The porous material A was supported in the voids of the carbon dioxide adsorbent of Example 6, at 96 vol% with respect to the carbon dioxide adsorbent. The air-flow resistance of the carbon dioxide adsorbent of Example 6 was 2.6 kPa·s/m.

The amount of carbon dioxide adsorbed by the carbon dioxide adsorbent of Example 6 and the desorption of carbon dioxide adsorbed by the carbon dioxide adsorbent of Example 6 were each 2.5 $CO_2$ mmol/g with respect to the polyethyleneimine mass (g).

(Example 7)

A nylon nonwoven fabric (hereunder referred to as "sample 7") comprising porous materials A and B was obtained in the same manner as Example 6, except that the two nonwoven fabrics sandwiching porous material B were changed to a nonwoven fabric made of nylon long fibers having a fiber diameter of 15 μm, a basis weight of 50 g/m$^2$, a void ratio of 81%, a specific surface area of 0.18 m$^2$/g and a thickness of 0.25 mm (product name: ELTAS N03050 by Asahi Kasei Corp.).

The loading amounts of the porous material A and porous material B in sample 7 were 60 g/m$^2$ and 216 g/m$^2$, respectively.

After then impregnating sample 7 with the ethanol solution of PEI prepared in Example 3, it was vacuum dried at 80°C for 4 hours to obtain a nylon nonwoven fabric supporting polyethyleneimine (hereinafter referred to as "carbon dioxide adsorbent of Example 7").

The amount of polyethyleneimine supported on the carbon dioxide adsorbent of Example 7 was determined to be 8 mmol/g by weight measurement of the sample before and after loading the polyethyleneimine.

The loading amount of the compound with an amino group with respect to the porous materials A and B in the carbon dioxide adsorbent of Example 7 was 72 mass%.

The porous material A was supported in the voids of the carbon dioxide adsorbent of Example 7, at 98 vol% with respect to the carbon dioxide adsorbent. The air-flow resistance of the carbon dioxide adsorbent of Example 7 was 2.8 kPa·s/m.

The adsorption of carbon dioxide adsorbed by the carbon dioxide adsorbent of Example 7 and the desorption of carbon dioxide adsorbed by the carbon dioxide adsorbent of Example 7 were each 2.1 $CO_2$ mmol/g with respect to the polyethyleneimine mass (g).

(Example 8)

Polyethyleneimine (PEI) having a number-average molecular weight Mn of 600 (product name: SP-006, by Nippon Shokubai Co., Ltd.) and a 30 mass% aqueous solution of an amino-modified silicone emulsion (product name: MF-14ES, by Shin-Etsu Chemical Co., Ltd.) were dissolved in ethanol to prepare a mixed solution of ethanol and water with a silicone concentration of 25 mass%, comprising a mixture of polyethyleneimine and silicone at 8:2.

The sample 6 prepared in Example 6 was impregnated with the mixed solution of ethanol and water with a silicone concentration of 25 mass%, and vacuum dried at 80°C for 4 hours to obtain a regenerated cellulose nonwoven fabric supporting polyethyleneimine (hereunder referred to as "carbon dioxide adsorbent of Example 8" or "sample 8"). The silicone compound content ratio in the polyethyleneimine supported by the carbon dioxide adsorbent of Example 8 was 20 mass%.

The amount of polyethyleneimine supported on the carbon dioxide adsorbent of Example 8 was determined to be 6 mmol/g by weight measurement of the sample before and after loading the polyethyleneimine.

The loading amount of the compound with an amino group with respect to the porous materials A and B in the carbon dioxide adsorbent of Example 8 was 54 mass%.

The porous material A was supported in the voids of the carbon dioxide adsorbent of Example 8, at 97 vol% with respect to the carbon dioxide adsorbent. The air-flow resistance of the carbon dioxide adsorbent of Example 8 was 2.9 kPa·s/m.

The adsorption of carbon dioxide adsorbed by the carbon dioxide adsorbent of Example 8 and the desorption of carbon dioxide adsorbed by the carbon dioxide adsorbent of Example 8 were each 2.3 $CO_2$ mmol/g with respect to the polyethyleneimine mass (g).

(Example 9)

A powder of porous material B was prepared by mixing 1200 g of globular porous silica having a mean particle size of 100 μm, a pore size of 27 nm, a pore volume of 1.8 ml/g and a BET specific surface area of 280 $m^2$/g (product name: CARiACT G, by Fuji Silysia Chemical, Ltd.), with 960 g of a polyethylene (PE)-based hot-melt material having a melting point of 110°C or higher (product of Asahi Kasei Corp.) in a mass ratio of 5:4. The hot-melt material content ratio in the porous material B was 45 mass%.

The powder of porous material B was fed to a nonwoven fabric (product name: BEMLIESE, by Asahi Kasei Corp.) comprising regenerated cellulose long fibers with a fiber diameter of 6 μm, a basis weight of 50 g/$m^2$, a void ratio of 89%, a specific surface area of 0.6 $m^2$/g and a thickness of 0.3 mm, to a silica content of 80 g in the porous material B.

The nonwoven fabric to which the porous material B powder had been fed, and a nonwoven fabric made of regenerated cellulose long fibers having a fiber diameter of 12 μm, a basis weight of 38 g/$m^2$, a void ratio of 92%, a specific surface area of 0.2 $m^2$/g and a thickness of 0.3 mm (product name: BEMLIESE by Asahi Kasei Corp.) were used to sandwich porous material B, and the stack was hot rolled at 120°C to obtain a cellulose nonwoven fabric having a porous material B loading amount of 144 g/$m^2$.

A 100 g portion of silica with a mean particle size of 5 μm, a pore size of 26 nm, a pore volume of 1.8 ml/g and a BET specific surface area of 280 $m^2$/g (product name: SILYSIA 250N, by Fuji Silysia Chemical, Ltd.) was gradually added to 2600 g of water while stirring for dispersion. To the obtained dispersion there was added 30 g of an aqueous solution of colloidal silica with an ethylene-vinyl acetate copolymer emulsion at 56 mass% concentration (product name: SUMIKA-FLEX S-201HQ, by of Sumitomo Chemiflex Co.) as a binder, to obtain a dispersion of the porous material A comprising the polymer emulsion at 17 mass% concentration. A cellulose nonwoven fabric sandwiching porous material B was impregnated with the dispersion and dried at 150°C for 4 hours, to obtain a cellulose nonwoven fabric comprising porous materials A and B (hereunder referred to as "sample 9").

The loading amounts of the porous material A and porous material B in sample 9 were 67 g/$m^2$ and 144 g/$m^2$, respectively.

After then impregnating sample 9 with the ethanol solution of PEI prepared in Example 3, it was vacuum dried at 80°C for 4 hours to obtain sample 9 supporting polyethyleneimine (hereinafter referred to as "carbon dioxide adsorbent of Example 9").

The amount of polyethyleneimine supported on the carbon dioxide adsorbent of Example 9 was determined to be 9 mmol/g by weight measurement of the sample before and after loading the polyethyleneimine.

The loading amount of the compound with an amino group with respect to the porous materials A and B in the carbon dioxide adsorbent of Example 9 was 133 mass%.

The porous material A was supported in the voids of the carbon dioxide adsorbent of Example 9, at 91 vol% with respect to the carbon dioxide adsorbent. The air-flow resistance of the carbon dioxide adsorbent of Example 9 was 3.6 kPa·s/m.

The amount of carbon dioxide adsorbed by the carbon dioxide adsorbent of Example 9 and the desorption of carbon dioxide adsorbed by the carbon dioxide adsorbent of Example 9 were each 5.9 $CO_2$ mmol/g with respect to the polyethyleneimine mass (g).

(Example 10)

A powder of porous material B was prepared by mixing 1200 g of globular porous silica having a mean particle size of 100 μm, a pore size of 27 nm, a pore volume of 1.8 ml/g and a BET specific surface area of 280 $m^2$/g (product name: CARiACT G, by Fuji Silysia Chemical, Ltd.), with 1920 g of a polyethylene (PE)-based hot-melt material having a melting point of 110°C or higher (product of Asahi Kasei Corp.) in a mass ratio of 5:8. The hot-melt material content ratio in the porous material B was 62 mass%.

The powder of porous material B was fed to a nonwoven fabric (product name: ELTAS E05040, by Asahi Kasei Corp.) comprising polyethylene terephthalate (PET) long fibers with a fiber diameter of 15 μm, a basis weight of 40 g/$m^2$, a void ratio of 78%, a specific surface area of 0.19 $m^2$/g and a thickness of 0.14 mm, to a silica content of 80 g in the porous material B.

The nonwoven fabric to which the porous material B powder had been fed, and a nonwoven fabric made of PET

long fibers having a fiber diameter of 15 μm, a basis weight of 40 g/m$^2$, a void ratio of 78%, a specific surface area of 0.19 m$^2$/g and a thickness of 0.14 mm (product name: ELTAS E05040, by Asahi Kasei Corp.) were used to sandwich the porous material B, and the stack was hot rolled at 120°C to obtain a cellulose nonwoven fabric having a porous material B loading amount of 188 g/m$^2$.

A 100 g portion of silica with a mean particle size of 5 μm, a pore size of 26 nm, a pore volume of 1.8 ml/g and a BET specific surface area of 280 m$^2$/g (product name: SILYSIA 250N, by Fuji Silysia Chemical, Ltd.) was gradually added to 2600 g of water while stirring for dispersion. To the obtained dispersion there was added 30 g of an aqueous solution of colloidal silica with an ethylene-vinyl acetate copolymer emulsion at 56 mass% concentration (product name: SUMIKAFLEX S-201HQ, by of Sumitomo Chemiflex Co.) as a binder, to obtain a dispersion of the porous material A comprising the polymer emulsion at 17 mass% concentration. A cellulose nonwoven fabric sandwiching porous material B was impregnated with the dispersion and dried at 150°C for 4 hours, to obtain a cellulose nonwoven fabric comprising porous materials A and B (hereunder referred to as "sample 10").

The loading amounts of the porous material A and porous material B in sample 10 were 35 g/m$^2$ and 188 g/m$^2$, respectively.

After then impregnating sample 10 with the ethanol solution of PEI prepared in Example 3, it was vacuum dried at 80°C for 4 hours to obtain sample 10 supporting polyethyleneimine (hereinafter referred to as "carbon dioxide adsorbent of Example 10").

The amount of polyethyleneimine supported on the carbon dioxide adsorbent of Example 10 was determined to be 6 mmol/g by weight measurement of the sample before and after loading the polyethyleneimine.

The loading amount of the compound with an amino group with respect to the porous materials A and B in the carbon dioxide adsorbent of Example 10 was 129 mass%.

The porous material A was supported in the voids of the carbon dioxide adsorbent of Example 10, at 67 vol% with respect to the carbon dioxide adsorbent. The air-flow resistance of the carbon dioxide adsorbent of Example 10 was 5.4 kPa·s/m.

The amount of carbon dioxide adsorbed by the carbon dioxide adsorbent of Example 10 and the desorption of carbon dioxide adsorbed by the carbon dioxide adsorbent of Example 10 were each 5.7 $CO_2$ mmol/g with respect to the polyethyleneimine mass (g).

(Example 11)

A powder of porous material B was prepared by mixing 1200 g of globular porous silica having a mean particle size of 100 μm, a pore size of 27 nm, a pore volume of 1.8 ml/g and a BET specific surface area of 280 m$^2$/g (product name: CARiACT G, by Fuji Silysia Chemical, Ltd.), with 960 g of a polyethylene (PE)-based hot-melt material having a melting point of 110°C or higher (product of Asahi Kasei Corp.) in a mass ratio of 5:4. The hot-melt material content ratio in the porous material B was 45 mass%.

The powder of porous material B was fed to a nonwoven fabric (product name: BEMLIESE, by Asahi Kasei Corp.) comprising regenerated cellulose long fibers with a fiber diameter of 6 μm, a basis weight of 50 g/m$^2$, a void ratio of 89%, a specific surface area of 0.6 m$^2$/g and a thickness of 0.3 mm, to a silica content of 80 g in the porous material B.

The nonwoven fabric to which the porous material B powder had been fed, and a nonwoven fabric made of regenerated cellulose long fibers having a fiber diameter of 12 μm, a basis weight of 38 g/m$^2$, a void ratio of 92%, a specific surface area of 0.2 m$^2$/g and a thickness of 0.3 mm (product name: BEMLIESE by Asahi Kasei Corp.) were used to sandwich porous material B, and the stack was hot rolled at 120°C to obtain sample 11 as a cellulose nonwoven fabric having a porous material B loading amount of 144 g/m$^2$.

After then impregnating sample 11 with the ethanol solution of PEI prepared in Example 3, it was vacuum dried at 80°C for 4 hours to obtain sample 11 supporting PEI (hereinafter referred to as "carbon dioxide adsorbent of Example 11").

The amount of PEI supported on the carbon dioxide adsorbent of Example 11 was determined to be 11 mmol/g based on weight measurement of the sample before and after loading the PEI.

The loading amount of the compound with an amino group with respect to the porous material B in the carbon dioxide adsorbent of Example 11 was 215 mass%.

The air-flow resistance of the carbon dioxide adsorbent of Example 11 was 0.59 kPa·s/m.

The amount of carbon dioxide adsorbed by the carbon dioxide adsorbent of Example 11 and the desorption of carbon dioxide adsorbed by the carbon dioxide adsorbent of Example 11 were each 3.0 $CO_2$ mmol/g with respect to the polyethyleneimine mass (g).

(Example 12)

An ethanol solution with a BAPPRZ concentration of 30 mass% was prepared by dissolving 1,4-bis(3-aminopropyl)piperazine (product name: BAPPRZ, by Koei Chemical Co., Ltd.) in ethanol. After then impregnating the prepared

BAPPRZ ethanol solution into the cellulose nonwoven fabric sample 11 having a porous material B loading amount of 144 g/m$^2$, prepared in Example 11, it was vacuum dried at 80°C for 4 hours to obtain a BAPPRZ-supporting sample 12 (hereinafter referred to as "carbon dioxide adsorbent of Example 12).

The amount of BAPPRZ supported on the carbon dioxide adsorbent of Example 12 was determined to be 9 mmol/g based on weight measurement of the sample before and after loading the BAPPRZ.

The loading amount of the compound with an amino group with respect to the porous material B in the carbon dioxide adsorbent of Example 12 was 213 mass%.

The air-flow resistance of the carbon dioxide adsorbent of Example 12 was 0.54 kPa·s/m.

The amount of carbon dioxide adsorbed by the carbon dioxide adsorbent of Example 12 and the desorption of carbon dioxide adsorbed by the carbon dioxide adsorbent of Example 12 were each 3.5 $CO_2$ mmol/g with respect to the polyethyleneimine mass (g).

(Example 13)

The PEI was dissolved in ethanol to prepare an ethanol solution with a PEI concentration of 15 mass%. Next, 1,4-epoxyhexane in an equal amount to PEI was added dropwise while stirring, and the mixture was subsequently stirred for 24 hours to obtain terminal epoxylated PEI (PEI-EH). After then impregnating the ethanol solution having PEI-EH dissolved in ethanol into the cellulose nonwoven fabric sample 11 having a porous material B loading amount of 144 g/m$^2$, prepared in Example 11, it was vacuum dried at 80°C for 4 hours to obtain a PEI-EH-supporting sample 13 (hereinafter referred to as "carbon dioxide adsorbent of Example 13).

The amount of PEI-EH supported on the carbon dioxide adsorbent of Example 13 was determined to be 8 mmol/g based on weight measurement of the sample before and after loading the PEI-EH.

The loading amount of the compound with an amino group with respect to the porous material B in the carbon dioxide adsorbent of Example 13 was 214 mass%.

The air-flow resistance of the carbon dioxide adsorbent of Example 13 was 0.57 kPa·s/m.

The amount of carbon dioxide adsorbed by the carbon dioxide adsorbent of Example 13 and the desorption of carbon dioxide adsorbed by the carbon dioxide adsorbent of Example 13 were each 2.4 $CO_2$ mmol/g with respect to the PEI-EH mass (g).

(Example 14)

BAPPRZ was dissolved in ethanol to prepare an ethanol solution with a BAPPRZ concentration of 15 mass%. Next, 1,4-epoxyhexane in an equal amount to BAPPRZ was added dropwise while stirring, and stirring was continued for 24 hours to obtain terminal epoxylated BAPPRZ (BAPPRZ-EH). After then impregnating an ethanol solution comprising the BAPPRZ-EH dissolved in ethanol into the cellulose nonwoven fabric sample 11 having a porous material B loading amount of 144 g/m$^2$, prepared in Example 11, it was vacuum dried at 80°C for 4 hours to obtain a BAPPRZ-EH-supporting sample 14 (hereinafter referred to as "carbon dioxide adsorbent of Example 14).

The amount of BAPPRZ-EH supported on the carbon dioxide adsorbent of Example 14 was determined to be 5 mmol/g based on weight measurement of the sample before and after loading the BAPPRZ-EH.

The loading amount of the compound with an amino group with respect to the porous material B in the carbon dioxide adsorbent of Example 14 was 214 mass%.

The air-flow resistance of the carbon dioxide adsorbent of Example 14 was 0.64 kPa·s/m.

The amount of carbon dioxide adsorbed by the carbon dioxide adsorbent of Example 14 and the desorption of carbon dioxide adsorbed by the carbon dioxide adsorbent of Example 14 were each 3.0 $CO_2$ mmol/g with respect to the BAPPRZ-EH mass (g).

(Example 15)

The carbon dioxide adsorbent fabricated in Example 6 was used to fabricate a spiral module. A powder of porous material B was prepared by mixing 12 kg of globular porous silica having a mean particle size of 100 μm, a pore size of 15 nm, a pore volume of 1.2 ml/g and a BET specific surface area of 300 m$^2$/g (product name: CARiACT Q15, by Fuji Silysia Chemical, Ltd.), with 9.6 kg of a polyethylene (PE)-based hot-melt material having a melting point of 110°C or higher (product of Asahi Kasei Corp.), in a mass ratio of 5:4.

The powder of porous material B was fed to a nonwoven fabric (product name: BEMLIESE, by Asahi Kasei Corp.) comprising regenerated cellulose long fibers with a fiber diameter of 6 μm, a basis weight of 50 g/m$^2$, a void ratio of 89%, a specific surface area of 0.6 m$^2$/g and a thickness of 0.3 mm, to a silica content of 120 g in the porous material B.

The nonwoven fabric to which the porous material B powder had been fed, and a nonwoven fabric made of regenerated cellulose long fibers having a fiber diameter of 12 μm, a basis weight of 38 g/m$^2$, a void ratio of 92%, a specific

surface area of 0.2 $m^2$/g and a thickness of 0.3 mm (product name: BEMLIESE by Asahi Kasei Corp.), were used to sandwich porous material B, and the stack was hot rolled at 120°C to obtain a cellulose nonwoven fabric roll sandwiching the porous material B.

Using a single 30 cm-wide polypropylene mesh spacer roll (product name: PROPYLTEX by Sefer Co.) having an open area ratio of 41% in the thickness direction and a thickness of 600 μm, as a plain weave with polypropylene (PP) fibers having a fiber diameter of 300 μm, one nonwoven fabric (carbon dioxide adsorbent) layer and one spacer layer were wrapped in a spiral fashion around a tube with a diameter of 20 mm, with the spacer layer contacting the tube, to fabricate a structure comprising a stack of the carbon dioxide adsorbent and the spacer.

In the same manner as Example 3, a 100 g portion of silica with a mean particle size of 6.4 μm, a pore size of 21 nm, a pore volume of 1.6 ml/g and a BET specific surface area of 300 $m^2$/g (product name: SILYSIA 370, by Fuji Silysia Chemical, Ltd.) was gradually added to 1300 g of water while stirring for dispersion. To the obtained dispersion there was added 200 g of a 20 mass% concentration aqueous solution of colloidal silica with a particle size of 40 to 100 nm (product name: SNOWTEX, by Nissan Chemical Industries, Ltd.), and then 0.7 g of a dispersing agent (product name: SD-10, by Toagosei Co., Ltd.) was added to prepare a dispersion comprising the porous material A.

The structure comprising the carbon dioxide adsorbent and spacer layered in a spiral fashion was impregnated with a dispersion comprising the porous material A and dried at 150°C for 4 hours to obtain a spiral roll supporting the porous materials A and B (hereunder referred to as "sample 15").

The loading amounts of the porous materials A and B in sample 15 were 60 g/$m^2$ and 216 g/$m^2$, respectively.

After impregnating sample 15 with the ethanol solution of polyethyleneimine prepared in Example 3, it was vacuum dried at 80°C for 4 hours to obtain a module supporting polyethyleneimine (hereunder, "module of Example 15").

The loading amount of polyethyleneimine supported on the module of Example 15 was determined to be 8 mmol/g by weight measurement of the sample before and after loading of the polyethyleneimine.

The construction and physical properties of the carbon dioxide adsorbent in the module fabricated in Example 15 were the same as in Example 6.

The module of Example 15 fabricated as described above was cut to a width of 200 mm and a length of 1050 mm and wrapped around a vinyl chloride rod with a diameter of 20 mm to fabricate a module sample with a diameter of 55 mm (hereunder referred to as "module sample of Example 15").

Packing was provided at both ends of the module sample of Example 15, after which it was placed in a carbon dioxide adsorption vessel (400 mm height), and a carbon dioxide adsorption step and desorption step were carried out.

The adsorption step was carried out by blowing air with a $CO_2$ concentration of 400 ppm at an air speed of 0.3 m/sec at a temperature of 25°C and a humidity of 50 RH%, and the desorption step was carried out by blowing dry $N_2$ at 0.06 m/sec at a temperature of 75°C.

The amount of carbon dioxide adsorbed by the module sample of Example 15 and the desorption amount of carbon dioxide adsorbed by the module sample of Example 15 were each 12 kg/$m^3$, and the pressure loss during adsorption was 300 Pa.

(Example 16)

A powder of porous material B was prepared by mixing 12 kg of globular porous silica having a mean particle size of 100 μm, a pore size of 15 nm, a pore volume of 1.2 ml/g and a BET specific surface area of 300 $m^2$/g (product name: CARiACT Q15, by Fuji Silysia Chemical, Ltd.), with 9.6 kg of a polyethylene (PE)-based hot-melt material having a melting point of 110°C or higher (product of Asahi Kasei Corp.), in a mass ratio of 5:4.

The powder of porous material B was fed to a nonwoven fabric (product name: BEMLIESE, by Asahi Kasei Corp.) comprising regenerated cellulose long fibers with a fiber diameter of 6 μm, a basis weight of 50 g/$m^2$, a void ratio of 89%, a specific surface area of 0.6 $m^2$/g and a thickness of 0.3 mm, to a silica content of 120 g in the porous material B.

The nonwoven fabric to which the porous material B powder had been fed, and a nonwoven fabric made of regenerated cellulose long fibers having a fiber diameter of 12 μm, a basis weight of 38 g/$m^2$, a void ratio of 92%, a specific surface area of 0.2 $m^2$/g and a thickness of 0.3 mm (product name: BEMLIESE by Asahi Kasei Corp.), were used to sandwich porous material B, and the stack was hot rolled at 120°C to obtain a cellulose nonwoven fabric roll sandwiching the porous material B.

An aqueous solution of PVA was coated by spraying onto the cellulose nonwoven fabric roll sandwiching the porous material B, to a polyvinyl alcohol (PVA) adhesive loading amount of 10 g/$m^2$.

The cellulose nonwoven fabric roll coated with PVA and sandwiching the porous material B was first cut out and used as a liner part. The cut out cellulose nonwoven fabric roll was also worked into a corrugated shape to form a core part. After coating the core part with an adhesive (PVA), it was overlaid with the liner part to form a layered body. The cellulose nonwoven fabric roll sandwiching the porous material B was then heated at 120°C for bonding to the liner part of the layered body, and it was worked into a corrugated form with a peak height of 2 mm and a width of 3 mm to obtain a corrugated roll.

A 200 g portion of silica with a mean particle size of 6.4 μm, a pore size of 21 nm, a pore volume of 1.6 ml/g and a

BET specific surface area of 300 $m^2/g$ (product name: SILYSIA 370, by Fuji Silysia Chemical, Ltd.) was gradually added to 2600 g of water while stirring for dispersion. To the obtained dispersion there was added 400 g of a 20 mass% concentration aqueous solution of colloidal silica with a particle size of 40 to 100 nm (product name: SNOWTEX, by Nissan Chemical Industries, Ltd.), and then 1.4 g of a dispersing agent (product name: SD-10, by Toagosei Co., Ltd.) was added to prepare a dispersion comprising the porous material A.

The fabricated corrugated roll was impregnated with a dispersion comprising the porous material A and dried at 150°C for 4 hours to obtain a corrugated structure supporting the porous materials A and B (hereunder referred to as "sample 16").

The loading amounts of the porous materials A and B in sample 16 were 60 $g/m^2$ and 216 $g/m^2$, respectively.

After impregnating sample 16 with the ethanol solution of polyethyleneimine prepared in Example 3, it was vacuum dried at 80°C for 4 hours to obtain a module supporting polyethyleneimine (hereunder, "module of Example 16").

The loading amount of polyethyleneimine supported on the module of Example 16 was determined to be 8 mmol/g by weight measurement of the sample before and after loading of the polyethyleneimine.

The construction and physical properties of the carbon dioxide adsorbent in the module fabricated in Example 16 were the same as in Example 6.

The module of Example 16 fabricated as described above was cut to a width of 200 mm and a length of 960 mm and wrapped around a vinyl chloride rod with a diameter of 20 mm to fabricate a module sample with a diameter of 55 mm (hereunder referred to as "module sample of Example 16").

Packing was provided at both ends of the module sample of Example 16, after which it was placed in a carbon dioxide adsorption vessel (400 mm height), and a step of carbon dioxide adsorption and desorption was carried out.

The adsorption step was carried out by blowing air with a $CO_2$ concentration of 400 ppm at an air speed of 0.3 m/sec at a temperature of 25°C and a humidity of 50 RH%, and the desorption step was carried out by blowing dry $N_2$ at 0.06 m/sec at a temperature of 75°C.

The amount of carbon dioxide adsorbed by the module sample of Example 16 and the desorption amount of carbon dioxide adsorbed by the module sample of Example 16 were each 16 $kg/m^3$, and the pressure loss was 180 Pa.

(Example 17)

A powder of porous material B was prepared by mixing 12 kg of globular porous silica having a mean particle size of 100 μm, a pore size of 27 nm, a pore volume of 1.8 ml/g and a BET specific surface area of 280 $m^2/g$ (product name: CARiACT G, by Fuji Silysia Chemical, Ltd.), with 9.6 kg of a polyethylene (PE)-based hot-melt material having a melting point of 110°C or higher (product of Asahi Kasei Corp.), in a mass ratio of 5:4.

The powder of porous material B was fed to a nonwoven fabric (product name: BEMLIESE, by Asahi Kasei Corp.) comprising regenerated cellulose long fibers with a fiber diameter of 6 μm, a basis weight of 50 $g/m^2$, a void ratio of 89%, a specific surface area of 0.6 $m^2/g$ and a thickness of 0.3 mm, to a silica content of 120 g in the porous material B.

The nonwoven fabric to which the porous material B powder had been fed, and a nonwoven fabric made of regenerated cellulose long fibers having a fiber diameter of 12 μm, a basis weight of 38 $g/m^2$, a void ratio of 92%, a specific surface area of 0.2 $m^2/g$ and a thickness of 0.3 mm (product name: BEMLIESE by Asahi Kasei Corp.), were used to sandwich porous material B, and the stack was hot rolled at 120°C to obtain a cellulose nonwoven fabric roll sandwiching the porous material B.

The cellulose nonwoven fabric roll sandwiching the porous material B was then heated at 120°C for bonding to the liner (low-melting-point PET mesh), and it was worked into a corrugated form with a peak height of 2 mm and a width of 3 mm to obtain a corrugated roll. The corrugated roll was then wrapped around a rod with a diameter of 20 mm to obtain a module with a corrugated structure.

In the same manner as Example 9, a 100 g portion of silica with a mean particle size of 5 μm, a pore size of 26 nm, a pore volume of 1.8 ml/g and a BET specific surface area of 280 $m^2/g$ (product name: SILYSIA 250N, by Fuji Silysia Chemical, Ltd.) was gradually added to 2600 g of water while stirring for dispersion. To the obtained dispersion there was added 30 g of an aqueous solution of colloidal silica with an ethylene-vinyl acetate copolymer emulsion at 56 mass% concentration (product name: SUMIKAFLEX S-201HQ, by of Sumitomo Chemiflex Co.) as a binder, to obtain a dispersion of the porous material A with an emulsion concentration of 17 mass%. The module with the corrugated structure fabricated as described above was impregnated with the dispersion comprising porous material A and dried at 150°C for 4 hours to obtain a corrugated structure supporting the porous materials A and B (hereunder referred to as "sample 17").

The loading amounts of the porous materials A and B in sample 17 were 67 $g/m^2$ and 144 $g/m^2$, respectively.

After impregnating sample 17 with the ethanol solution of polyethyleneimine prepared in Example 3, it was vacuum dried at 80°C for 4 hours to obtain a module supporting polyethyleneimine (hereunder, "module of Example 17").

The loading amount of polyethyleneimine supported on the module of Example 17 was determined to be 9 mmol/g by weight measurement of the sample before and after loading of the polyethyleneimine.

The construction and physical properties of the carbon dioxide adsorbent in the module fabricated in Example 17

were the same as in Example 9.

The module of Example 17 fabricated as described above was cut to a width of 200 mm and a length of 960 mm and wrapped around a vinyl chloride rod with a diameter of 20 mm to fabricate a module sample with a diameter of 55 mm (hereunder referred to as "module sample of Example 17").

Packing was provided at both ends of the module sample of Example 17, after which it was placed in a carbon dioxide adsorption vessel (400 mm height), and a carbon dioxide adsorption step and desorption step were carried out.

The adsorption step was carried out by blowing air with a $CO_2$ concentration of 400 ppm at an air speed of 0.3 m/sec at a temperature of 25°C and a humidity of 50 RH%, and the desorption step was carried out by blowing dry $N_2$ at 0.06 m/sec at a temperature of 75°C.

The amount of carbon dioxide adsorbed by the module sample of Example 17 and the desorption amount of carbon dioxide adsorbed by the module sample of Example 17 were each 35 kg/m$^3$, and the pressure loss was 80 Pa.

(Comparative Example 1)

To a dispersion comprising cellulose nanofibers (CNF) with fiber diameters of 10 nm to 100 nm there was added 2-aminoethylaminopropyldimethoxysilane (AEAPDMS: Wacker Co.), and the mixture was stirred to prepare a dispersion comprising CNF and AEAPDMS.

The dispersion comprising CNF and AEAPDMS was freeze-dried to obtain CNF particles supporting AEAPDMS (hereinafter referred to as "carbon dioxide adsorbent of Comparative Example 1). The aminoethylaminopropyl group loading amount in the CNF was 5 mmol/g.

The carbon dioxide adsorbent of Comparative Example 1 was filled into a carbon dioxide adsorption vessel (400 mm height) to a location at the height of 400 mm, and adsorption and desorption of carbon dioxide were carried out.

The amount of carbon dioxide adsorbed by the carbon dioxide adsorbent of Comparative Example 1 and the desorption amount of carbon dioxide adsorbed by the carbon dioxide adsorbent of Comparative Example 1 were each 4 kg/m$^3$, and the pressure loss was greater than 1 kPa.

[Table 1-1]

| | | Units | Example 1 | Example 2 | Example 3 | Example 4 | Example 5 |
|---|---|---|---|---|---|---|---|
| Nonwoven fabric | Material | | Regenerated cellulose | Regenerated cellulose | Regenerated cellulose | Regenerated cellulose | Regenerated cellulose |
| Porous material A | Type of porous inorganic particles 1 | | Zeolitel3X | | SILYSIA 370 | | SILYSIA 370 |
| | Type of porous inorganic particles 2 | | SNOWTEX UP | | SNOWTEX UP | | SNOWTEX UP |
| | Content ratio of porous inorganic particles 1 | mass% | 71% | | 71% | | 71% |
| | Particle size of porous inorganic particles 1 | µm | 10 | | 6.4 | | 6.4 |
| | Pore size of porous inorganic particles 1 | nm | 1 | | 21 | | 21 |
| | Pore volume of porous inorganic particles 1 | ml/g | 1 | | 1.6 | | 1.6 |
| | Specific surface area of porous inorganic particles 1 | $m^2/g$ | 700 | | 300 | | 300 |
| | Polymer emulsion | | | | | | |
| | Content ratio of polymer emulsion | mass% | | | | | |
| | Loading amount of porous material A | $g/m^2$ | 80 | | 60 | | 60 |

(continued)

| | | Units | Example 1 | Example 2 | Example 3 | Example 4 | Example 5 |
|---|---|---|---|---|---|---|---|
| Nonwoven fabric | Material | | Regenerated cellulose | Regenerated cellulose | Regenerated cellulose | Regenerated cellulose | Regenerated cellulose |
| Porous material B | Type of porous inorganic particles | | | Zeolite13X | | Type B silica gel | Type B silica gel |
| | Content ratio of hot-melt material | mass% | | 45% | | 45% | 45% |
| | Particle size | μm | | 300 | | 100 | 100 |
| | Pore size | nm | | 1 | | 6 | 6 |
| | Pore volume | ml/g | | 1 | | 0.8 | 0.8 |
| | Specific surface area | $m^2/g$ | | 700 | | 450 | 450 |
| | Loading amount of porous material B | $g/m^2$ | | 270 | | 270 | 270 |
| Compound with amino group | Type | | | | PEI | PEI | PEI |
| | Loading amount with respect to porous material comprising carbon dioxide adsorbent | mass% | | | 92 | 72 | 60 |
| | Loading amount with respect to carbon dioxide adsorbent | mmol/g | | | 8 | 7 | 7 |
| Silicone compound | Type | | | | | | |
| | Content ratio in compound with amino group | mass% | | | | | |

(continued)

| | | Units | Example 1 | Example 2 | Example 3 | Example 4 | Example 5 |
|---|---|---|---|---|---|---|---|
| Nonwoven fabric | Material | | Regenerated cellulose | Regenerated cellulose | Regenerated cellulose | Regenerated cellulose | Regenerated cellulose |
| Physical properties of carbon dioxide adsorbent | Pore volume | ml/g | 0.45 | 0.42 | 0.4 | 0.2 | 0.25 |
| | Specific surface area | $m^2/g$ | 220 | 290 | 12 | 8 | 7 |
| | Air-flow resistance | kPa·s/m | 0.56 | 6.3 | 0.54 | 9.6 | 11.2 |
| | Content of porous material A in voids | vol% | 95 | | 95 | | 98 |
| Carbon dioxide adsorbent performance | $CO_2$ adsorption | mmol/g | 0.4 | 0.4 | 2 | 1.7 | 1.6 |
| | $CO_2$ desorption | mmol/g | 0.4 | 0.4 | 2 | 1.7 | 1.6 |

[Table 1-2]

| | | Units | Example 6 | Example 7 | Example 8 | Example 9 | Example 10 |
|---|---|---|---|---|---|---|---|
| Nonwoven fabric | Material | | Regenerated cellulose | Nylon | Regenerated cellulose | Regenerated cellulose | PET |
| Porous material A | Type of porous inorganic particles 1 | | SILYSIA 370 | SILYSIA 370 | SILYSIA 370 | SILYSIA 250N | SILYSIA 250N |
| | Type of porous inorganic particles 2 | | SNOWTEX UP | SNOWTEX UP | SNOWTEX UP | | |
| | Content ratio of porous inorganic particles 1 | mass% | 71% | 71% | 71% | 83% | 83% |
| | Particle size of porous inorganic particles 1 | μm | 6.4 | 6.4 | 6.4 | 5 | 5 |
| | Pore size of porous inorganic particles 1 | nm | 21 | 21 | 21 | 26 | 26 |
| | Pore volume of porous inorganic particles 1 | ml/g | 1.6 | 1.6 | 1.6 | 1.8 | 1.8 |
| | Specific surface area of porous inorganic particles 1 | $m^2/g$ | 300 | 300 | 300 | 280 | 280 |
| | Polymer emulsion | | | | | SUMIKAFLEX S-201HQ | SUMIKAFLEX S-201HQ |
| | Content ratio of polymer emulsion | mass% | | | | 17% | 17% |
| | Loading amount of porous material A | $g/m^2$ | 60 | 60 | 60 | 67 | 35 |

(continued)

| | | Units | Example 6 | Example 7 | Example 8 | Example 9 | Example 10 |
|---|---|---|---|---|---|---|---|
| Nonwoven fabric | Material | | Regenerated cellulose | Nylon | Regenerated cellulose | Regenerated cellulose | PET |
| Porous material B | Type of porous inorganic particles | | CARiACT Q15 | CARiACT Q15 | CARiACT Q15 | CARiACT G | CARiACT G |
| | Content ratio of hot-melt material | mass% | 45% | 45% | 45% | 45% | 62% |
| | Particle size | μm | 100 | 100 | 100 | 100 | 100 |
| | Pore size | nm | 15 | 15 | 15 | 27 | 27 |
| | Pore volume | ml/g | 1.2 | 1.2 | 1.2 | 1.8 | 1.8 |
| | Specific surface area | $m^2/g$ | 300 | 300 | 300 | 280 | 280 |
| | Loading amount of porous material B | $g/m^2$ | 216 | 216 | 216 | 144 | 188 |
| Compound with amino group | Type | | PEI | PEI | PEI | PEI | PEI |
| | Loading amount with respect to porous material comprising carbon dioxide adsorbent | mass% | 70 | 72 | 54 | 133 | 129 |
| | Loading amount with respect to carbon dioxide adsorbent | mmol/g | 8 | 8 | 6 | 9 | 6 |
| Silicone compound | Type | | | | Amino-modified silicone emulsion MF-14ES | | |
| | Content ratio in compound with amino group | mass% | | | 20 mass% | | |
| Physical properties of carbon dioxide | Pore volume | ml/g | 0.2 | 0.21 | 0.18 | 0.054 | 0.036 |
| | Specific surface area | $m^2/g$ | 8 | 8 | 8 | 9 | 7 |
| | Air-flow resistance | kPa·s/m | 2.6 | 2.8 | 2.9 | 3.6 | 5.4 |
| adsorbent | Content of porous material A in voids | vol% | 96 | 98 | 97 | 91 | 67 |
| carbon dioxide adsorbent performance | $CO_2$ adsorption | mmol/g | 2.5 | 2.1 | 2.3 | 5.9 | 5.7 |
| | $CO_2$ desorption | mmol/g | 2.5 | 2.1 | 2.3 | 5.9 | 5.7 |

[Table 1-3]

| | | Units | Example 11 | Example 12 | Example 13 | Example 14 |
|---|---|---|---|---|---|---|
| Nonwoven fabric | Material | | Regenerated cellulose | Regenerated cellulose | Regenerated cellulose | Regenerated cellulose |
| Porous material A | Type of porous inorganic particles 1 | | | | | |
| | Type of porous inorganic particles 2 | | | | | |
| | Content ratio of porous inorganic particles 1 | mass% | | | | |
| | Particle size of porous inorganic particles 1 | μm | | | | |
| | Pore size of porous inorganic particles 1 | nm | | | | |
| | Pore volume of porous inorganic particles 1 | ml/g | | | | |
| | Specific surface area of porous inorganic particles 1 | $m^2/g$ | | | | |
| | Polymer emulsion | | | | | |
| | Content ratio of polymer emulsion | mass% | | | | |
| | Loading amount of porous material A | $g/m^2$ | | | | |
| Porous material B | Type of porous inorganic particles | | CARiACT G | CARiACT G | CARiACT G | CARiACT G |
| | Content ratio of hot-melt material | mass% | 45% | 45% | 45% | 45% |
| | Particle size | μm | 100 | 100 | 100 | 100 |
| | Pore size | nm | 27 | 27 | 27 | 27 |
| | Pore volume | ml/g | 1.8 | 1.8 | 1.8 | 1.8 |
| | Specific surface area | $m^2/g$ | 280 | 280 | 280 | 280 |
| | Loading amount of porous material B | $g/m^2$ | 144 | 144 | 144 | 144 |

(continued)

| | | Units | Example 11 | Example 12 | Example 13 | Example 14 |
|---|---|---|---|---|---|---|
| Nonwoven fabric | Material | | Regenerated cellulose | Regenerated cellulose | Regenerated cellulose | Regenerated cellulose |
| Compound with amino group | Type | | PEI | BAPPRZ | PEI-EH | BAPPRZ-EH |
| | Loading amount with respect to porous material comprising carbon dioxide adsorbent | mass% | 215 | 213 | 214 | 214 |
| | Loading amount with respect to carbon dioxide adsorbent | mmol/g | 11 | 9 | 8 | 5 |
| Silicone compound | Type | | | | | |
| | Content ratio in compound with amino group | mass% | | | | |
| Physical properties of carbon dioxide adsorbent | Pore volume | ml/g | 0.01 | 0.1 | 0.01 | 0.09 |
| | Specific surface area | $m^2/g$ | 2 | 29 | 3 | 18 |
| | Air-flow resistance | kPa·s/m | 0.59 | 0.54 | 0.57 | 0.64 |
| | Content of porous material A in voids | vol% | | | | |
| carbon dioxide adsorbent performance | $CO_2$ adsorption | mmol/g | 3 | 3.5 | 2.4 | 3 |
| | $CO_2$ desorption | mmol/g | 3 | 3.5 | 2.4 | 3 |

[Table 2]

| | | | Example 15 | Example 16 | Example 17 | Comp. Example 1 |
|---|---|---|---|---|---|---|
| Physical properties of carbon dioxide adsorbent | Type of carbon dioxide adsorbent | | Example 6 | Example 6 | Example 9 | AEAPDMS-supporting CNF particles |
| | Loading amount of porous material A | $g/m^2$ | 60 | 60 | 67 | |
| | Loading amount of porous material B | $g/m^2$ | 216 | 216 | 144 | |
| | Loading amount in compound with amino group | mmol/g | 8 | 8 | 9 | 5 |
| | Number of nonwoven fabric layers supporting compound with amino group | Count | 1 | 1 | 1 | |

(continued)

| | | | Example 15 | Example 16 | Example 17 | Comp. Example 1 |
|---|---|---|---|---|---|---|
| Module structure | Module shape | | Spiral | Corrugated | Corrugated | Particle filling |
| | Module length | mm | 200 | 200 | 200 | |
| | Module diameter | mm | 55 | 55 | 55 | |
| Spacer | Present/absent | | Present | Absent | Absent | Absent |
| | Material | | PP | | | |
| | Fiber diameter | μm | 300 | | | |
| | Weave | | Plain weave | | | |
| | Thickness | μm | 600 | | | |
| | Open area ratio | % | 41 | | | |
| Liner | Liner type | | | Example 6 | PET mesh | |
| | Corrugated roll peak height | mm | | 2 | 2 | |
| | Corrugated roll width | mm | | 3 | 3 | |
| | Open area ratio | % | | 20 | 30 | |
| Module performance | $CO_2$ adsorption | $kg/m^3$ | 12 | 16 | 35 | 4 |
| | $CO_2$ desorption | $kg/m^3$ | 12 | 16 | 35 | 4 |
| | Pressure loss | Pa | 300 | 180 | 80 | >1 kPa |

REFERENCE SIGNS LIST

1 Carbon dioxide adsorbent
2 Fiber structure
3 Porous material A or porous material B
3a Porous inorganic particles
3b Porous inorganic particles
4 Hot-melt material
5 Porous inorganic support layer
6 Voids of fiber structure
7 Module
8 Carbon dioxide adsorption vessel
9 Tube
10 Spacer

INDUSTRIAL APPLICABILITY

The present invention can be utilized in a wide range of industrial fields, for treatment (such as DAC) of carbon dioxide ($CO_2$) that has been emitted into the atmosphere by chemical engineering or other processes.

## Claims

**1.** A carbon dioxide adsorbent comprising:

a plurality of fiber structures and

a porous material B that forms a porous inorganic support layer between the plurality of fiber structures, wherein:

a loading amount of the porous material B of the porous inorganic support layer is 10 g/$m^2$ to 500 g/$m^2$ with respect to the plurality of fiber structures, and
an air-flow resistance in the thickness direction of the fiber structure is 0.01 kPa·s/m to 50 kPa·s/m.

**2.** A carbon dioxide adsorbent comprising:

a fiber structure and
a porous material A supported on the surface or among voids of the fiber structure, wherein
the porous material A is supported in the voids of the fiber structure to an amount of 50 vol% or greater with respect to the fiber structure, a loading amount of the porous material A being 10 g/$m^2$ to 500 g/$m^2$ with respect to the fiber structure, and
an air-flow resistance in the thickness direction of the fiber structure is 0.01 kPa·s/m to 50 kPa·s/m.

**3.** The carbon dioxide adsorbent according to claim 1, comprising:

a plurality of fiber structures, and
a porous material A supported on the surface or among voids of at least one of the fiber structures, wherein
the porous material A is supported in the voids of the fiber structure to an amount of 50 vol% or greater with respect to the fiber structure, a loading amount of the porous material A being 10 g/$m^2$ to 500 g/$m^2$ with respect to the fiber structure, and
an air-flow resistance in the thickness direction of the fiber structure is 0.01 kPa·s/m to 50 kPa·s/m.

**4.** The carbon dioxide adsorbent according to any one of claims 1 to 3, wherein a total loading amount of the porous materials A and B with respect to the fiber structure is 50 g/$m^2$ or greater.

**5.** A carbon dioxide adsorbent having a layered structure comprising at least one layer of the carbon dioxide adsorbent according to any one of claims 1 to 3.

**6.** The carbon dioxide adsorbent according to any one of claims 1 to 3, wherein:

the loading amount of the porous material A is 10 g/$m^2$ to 500 g/$m^2$ with respect to the fiber structure,
a loading amount of the porous material B is 10 g/$m^2$ to 500 g/$m^2$ with respect to the fiber structure, and
a total loading amount of the porous materials A and B is 50 g/$m^2$ or greater with respect to the fiber structure.

**7.** The carbon dioxide adsorbent according to claim 2, wherein the porous material A comprises:

porous inorganic particles having a mean particle size of 0.1 μm to 30 μm, and
at least one type of porous inorganic particles selected from the group consisting of colloidal silica, colloidal alumina, and colloidal silica colloidal alumina precursors, having a mean particle size of 1 nm to 400 nm, and
the porous inorganic particles with a mean particle size of 0.1 μm to 30 μm are present at 10 mass% to 99 mass% with respect to 100 mass% of the porous material A.

**8.** The carbon dioxide adsorbent according to claim 7, wherein the porous material A comprises:
porous inorganic particles with a mean particle size of 0.1 μm to 30 μm, and a polymer emulsion.

**9.** The carbon dioxide adsorbent according to claim 1, wherein the porous inorganic support layer:

is formed of the porous material B comprising porous inorganic particles with a mean particle size of 30 μm to 3 mm and a hot-melt material having a melting point of 50°C to 150°C, and
comprises the hot-melt material at 1 mass% to 80 mass% with respect to the total of the porous inorganic particles and the hot-melt material.

**10.** The carbon dioxide adsorbent according to claim 7 or 9, wherein the porous inorganic particles contained in the porous materials A and B each:
have a BET specific surface area of 50 $m^2$/g to 3000 $m^2$/g and a mean pore size of 1 nm to 50 nm, and are of at least one type selected from the group consisting of silica, alumina, silica-alumina, titania, zirconia, activated carbon, zeolite,

alkali metal ferrites and MOF.

**11.** The carbon dioxide adsorbent according to any one of claims 1 to 3, wherein the mean fiber diameter of the fiber structure is 1 μm to 50 μm and the void ratio of the fiber structure is 50% to 95%.

**12.** The carbon dioxide adsorbent according to any one of claims 1 to 3, wherein a compound with an amino group is supported on the porous material A and/or B in a range of 10 mass% to 300 mass%.

**13.** The carbon dioxide adsorbent according to claim 12, wherein the compound with an amino group comprises at least one type of silicone compound selected from the group consisting of silicone oil, silsesquioxane and MQ resins.

**14.** The carbon dioxide adsorbent according to claim 13, comprising the silicone compound at 1 mass% to 90 mass% in the compound with an amino group.

**15.** A module for adsorption, separation and capture of carbon dioxide, having a layered structure comprising at least one layer of a carbon dioxide adsorbent according to any one of claims 1 to 3 and at least one layer of a spacer.

**16.** A module for adsorption, separation and capture of carbon dioxide, having a corrugated structure employing at least one layer of a carbon dioxide adsorbent according to any one of claims 1 to 3.

**17.** A module for adsorption, separation and capture of carbon dioxide,

wherein the corrugated structure comprises a core part and a liner part, and
The carbon dioxide adsorbent according to any one of claims 1 to 3 is used for both the core part and the liner part.

**18.** The module for adsorption, separation and capture of carbon dioxide according to claim 17, wherein at least one selected from the group consisting of meshes, nonwoven fabrics and porous sheets is used in the liner part.

**19.** A method for direct air capture (DAC) in which carbon dioxide in the atmosphere is directly captured, the method comprising the following steps:

an adsorption step in which carbon dioxide is adsorbed onto the carbon dioxide adsorbent in The module for adsorption, separation and capture of carbon dioxide according to claim 15; and
a desorption step in which the temperature or pressure is changed to desorb the carbon dioxide.

Fig. 1

2
1
5
2
4
3
3b

Fig. 2

50× 200 μm WD:12.7mm 1kV 2023/10/19 13:59:59 S

Fig. 3

3a
6
3
1
3a
2

Fig. 4

50x 200 μm WD:13.6mm 1kV 2023/10/19 10:16:26 S

Fig. 5

$CO_2$-
containing
air
$CO_2$-
free air
8
7
9
1
10

Fig. 6

# Fig. 7

Blower
Temperature/
humidity sensor
Moisture
Flow meter
Adsorption vessel
Differential
pressure gauge
Vacuum pump
$CO_2$ capture
$CO_2$ sensor
Open to
atmosphere
Low-temperature
steam (60° C)

DAC system diagram

## INTERNATIONAL SEARCH REPORT

International application No. **PCT/JP2024/040679**

**A. CLASSIFICATION OF SUBJECT MATTER**

***B01J 20/28***(2006.01)i; ***B01D 53/14***(2006.01)i; ***B01J 20/02***(2006.01)i; ***B01J 20/18***(2006.01)i; ***B01J 20/26***(2006.01)i; ***B01J 20/34***(2006.01)i; ***C01B 32/50***(2017.01)i

FI: B01J20/28 Z; B01J20/02 A; B01J20/18; B01J20/26 A; B01J20/34 E; B01J20/34 H; C01B32/50; B01J20/02 C; B01D53/14 100

According to International Patent Classification (IPC) or to both national classification and IPC

**B. FIELDS SEARCHED**

Minimum documentation searched (classification system followed by classification symbols)

B01J20/28; B01D53/14; B01J20/02; B01J20/18; B01J20/26; B01J20/34; C01B32/50

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/187730 A1 (W. L. GORE & ASSOCIATES, INC.) 09 September 2022 (2022-09-09) entire text, all drawings | 1-19 |
| A | US 2023/0211276 A1 (CLIMEWORKS AG) 06 July 2023 (2023-07-06) entire text, all drawings | 1-19 |
| A | WO 2023/140307 A1 (PANASONIC INTELLECTUAL PROPERTY MANAGEMENT CO., LTD.) 27 July 2023 (2023-07-27) entire text, all drawings | 1-19 |
| A | WO 2022/249773 A1 (PANASONIC INTELLECTUAL PROPERTY MANAGEMENT CO., LTD.) 01 December 2022 (2022-12-01) entire text, all drawings | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 January 2025** | **04 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/040679**

**C. DOCUMENTS CONSIDERED TO BE RELEVANT**

| Category* | Citation of document, with indication, where appropriate, of the relevant passages | Relevant to claim No. |
|---|---|---|
| A | WO 2020/044944 A1 (KABUSHIKIGAISYA SEIBU-GIKEN) 05 March 2020 (2020-03-05) entire text, all drawings | 1-19 |
| P, A | JP 2024-150184 A (ASAHI KASEI KABUSHIKI KAISHA) 23 October 2024 (2024-10-23) entire text, all drawings | 1-19 |

Form PCT/ISA/210 (second sheet) (July 2022)

**INTERNATIONAL SEARCH REPORT**
**Information on patent family members**

International application No.
**PCT/JP2024/040679**

| Patent document cited in search report | Publication date (day/month/year) | Patent family member(s) | Publication date (day/month/year) |
|---|---|---|---|
| WO 2022/187730 A1 | 09 September 2022 | JP 2024-509561 A | |
| | | US 2024/0149242 A1 | |
| | | EP 4301510 A1 | |
| | | CN 116963831 A | |
| | | KR 10-2023-0155511 A | |
| US 2023/0211276 A1 | 06 July 2023 | WO 2021/239747 A1 | |
| | | EP 4157484 A1 | |
| | | CA 3175191 A | |
| WO 2023/140307 A1 | 27 July 2023 | JP 2023-106026 A | |
| WO 2022/249773 A1 | 01 December 2022 | EP 4349450 A1 | |
| | | entire text, all drawings | |
| | | CN 117355369 A | |
| | | JP 2022-179864 A | |
| WO 2020/044944 A1 | 05 March 2020 | US 2021/0039036 A1 | |
| | | entire text, all drawings | |
| | | CN 111278530 A | |
| | | JP 2020-32341 A | |
| JP 2024-150184 A | 23 October 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012168346 A
- WO 2014170184 A
- JP 2014533195 A